(19) Europäisches Patentamt
European Patent Office
Office européen des brevets

(11) EP 4 304 858 B1

(12) FASCICULE DE BREVET EUROPEEN

(45) Date de publication et mention de la délivrance du brevet:
**02.04.2025 Bulletin 2025/14**

(21) Numéro de dépôt: **22711261.2**

(22) Date de dépôt: **28.02.2022**

(51) Classification Internationale des Brevets (IPC):
***B32B 25/04*** (2006.01) ***B32B 7/12*** (2006.01)
***B32B 25/02*** (2006.01) ***B32B 25/12*** (2006.01)
***B32B 25/14*** (2006.01) ***B32B 25/16*** (2006.01)
***B60C 9/00*** (2006.01)

(52) Classification Coopérative des Brevets (CPC):
**B32B 25/042; B32B 7/12; B32B 25/02; B32B 25/12; B32B 25/14; B32B 25/16; B60C 1/00; B60C 1/0016; B60C 1/0025; B60C 1/0041;**
B32B 2250/248; B32B 2264/102; B32B 2264/108; B32B 2270/00; B32B 2307/732; (Cont.)

(86) Numéro de dépôt international:
**PCT/FR2022/050351**

(87) Numéro de publication internationale:
**WO 2022/189724 (15.09.2022 Gazette 2022/37)**

# (54) STRATIFIÉ ÉLASTOMÈRE

ELASTOMERLAMINAT

ELASTOMER LAMINATE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.03.2021 FR 2102400**

(43) Date de publication de la demande:
**17.01.2024 Bulletin 2024/03**

(73) Titulaire: **COMPAGNIE GENERALE DES ETABLISSEMENTS MICHELIN**
**63000 Clermont-Ferrand (FR)**

(72) Inventeurs:
- **ARAUJO DA SILVA, José-Carlos**
  **63040 CLERMONT-FERRAND Cedex 9 (FR)**
- **FERRAND, Thomas**
  **63040 CLERMONT-FERRAND Cedex 9 (FR)**
- **MORESO, Emma**
  **63040 CLERMONT-FERRAND Cedex 9 (FR)**
- **PRAS, Maxime**
  **63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**FR-A1- 3 029 138** **FR-A1- 3 078 973**
**FR-A1- 3 089 976**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



(Cont. page suivante)

(52) Classification Coopérative des Brevets (CPC):
(Cont.)B32B 2433/00; B32B 2605/08

## Description

Le domaine de la présente invention est celui des stratifiés de caoutchouc comportant un élastomère diénique fortement saturé, en particulier ceux destinés à être utilisés dans un pneumatique.

Un pneumatique comporte usuellement deux bourrelets destinés à entrer en contact avec une jante, un sommet composé d'au moins une armature de sommet et une bande de roulement, deux flancs, le pneumatique étant renforcé par une armature de carcasse ancrée dans les deux bourrelets.

Dans la fabrication conventionnelle d'un pneumatique, les différents composants constitutifs du sommet, de l'armature de carcasse, des bourrelets et des flancs sont assemblés pour former un bandage de pneumatique. L'étape d'assemblage est suivie d'une étape de conformation du bandage pour donner la forme torique à l'assemblage avant l'étape de cuisson sous presse.

Lors de l'assemblage du pneumatique, la bande de roulement est disposée radialement extérieurement à l'armature de sommet, et est généralement séparée de cette dernière par une sous-couche de bande de roulement. Les flancs, quant à eux, sont des couches élastomères disposées à l'extérieur de l'armature de carcasse par rapport à la cavité interne du pneumatique, entre le sommet et le bourrelets de sorte à couvrir totalement ou partiellement la zone de l'armature de carcasse s'étendant du sommet aux bourrelets.

La bande de roulement, qui est destinée à entrer en contact avec le sol lors du roulage du pneumatique, doit présenter des propriétés très spécifiques que sont notamment une bonne adhérence tant sur sol sec que sur sol humide, une faible résistance au roulement et une bonne résistance à usure. Le flanc du pneumatique est quant à lui soumis à des cycles de déformation comme la flexion au cours du roulage du pneumatique, la composition de caoutchouc constitutive d'un flanc de pneumatique doit être à la fois suffisamment flexible et peu hystérétique, mais également présenter une bonne résistance aux agressions physiques, telles que les chocs trottoir, et chimiques telles que l'attaque ozone. De ce fait, les compositions des bandes de roulement et des flancs de pneumatiques sont constituées d'une composition très spécifique, différente des couches de pneumatiques sur lesquelles elles sont disposées, telles que respectivement la sous-couche de la bande de roulement, ou la nappe carcasse, qui sont souvent constituées d'une composition comprenant un élastomère diénique fortement insaturé, tel que du caoutchouc naturel, et d'une charge renforçante, telle que du noir de carbone.

Cette différence de composition peut entraîner une diminution des propriétés d'adhésion de la bande de roulement ou du flanc d'un pneumatique avec leur couche adjacente respective.

Par conséquent, il demeure important de mettre au point des compositions présentant de bonnes propriétés vis-à-vis du poste (bande de roulement ou flanc par exemple) auquel elles sont destinées, tout en présentant une bonne adhésion sur leur couche adjacente respective, en particulier pour améliorer la tenue des interfaces à cuit.

FR 3089 976 A1 et FR 3078 973 A1 donnent des exemples de composition de caoutchouc à base de copolymères contenant des unités d'un 1,3-diène.

Poursuivant ses recherches, la Demanderesse a découvert que l'utilisation d'un copolymère comprenant des unités éthylène et des unités d'un 1,3-diène spécifique, permet, d'améliorer davantage l'adhésion de la composition sur une composition diénique.

Ainsi un premier objet de l'invention est un stratifié élastomère comprenant au moins deux couches adjacentes :

- la première couche étant constituée d'une composition de caoutchouc à base de :

    ◦ 20 à 100 pce d'au moins un copolymère comprenant des unités éthylène et des unités d'un 1,3-diène de formule (I), les unités éthylène dans le copolymère représentant plus de 50% en mole des unités monomères du copolymère,

    $$CH2{=}CR{-}CH{=}CH2 \qquad (I)$$

    le symbole R représentant une chaîne hydrocarbonée ayant 3 à 20 atomes de carbone ;
    ◦ 0 à 80 pce d'au moins un élastomère diénique ayant un taux massique d'unité diénique supérieur à 50% ;
    ◦ 10 à 100 pce d'un système plastifiant comprenant au moins un plastifiant liquide à 23°C et/ou au moins une résine plastifiante présentant une température de transition vitreuse supérieure à 20°C ;
    ◦ une charge renforçante ; et
    ◦ un système de réticulation,

- la deuxième couche étant constituée d'une composition de caoutchouc à base d'un élastomère diénique ayant un taux massique d'unité diénique supérieur à 50% et d'un système de réticulation.

Un autre objet de l'invention est un article en caoutchouc, ainsi qu'un bandage pneumatique ou non-pneumatique comprenant ce stratifié.

## I- DÉFINITIONS

Par l'expression « à base de » utilisée pour définir les constituants d'un système catalytique, on entend le mélange de ces constituants, ou le produit de la réaction d'une partie ou de la totalité de ces constituants entre eux.

Par l'expression « composition à base de », il faut entendre une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par « matrice élastomère », on entend l'ensemble des élastomères de la composition, y compris le copolymère défini ci-dessous.

Sauf indication contraire, les taux des unités résultant de l'insertion d'un monomère dans un copolymère sont exprimés en pourcentage molaire par rapport à la totalité des unités monomères du copolymère.

Par l'expression « partie en poids pour cent parties en poids d'élastomère » (ou pce), il faut entendre au sens de la présente invention, la part, en masse pour cent parties d'élastomère présent dans la composition de caoutchouc considérée et constitutive d'une couche.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé "minoritaire" est un composé qui ne représente pas la fraction massique la plus grande parmi les composés du même type. De préférence par majoritaire, on entend présent à plus de 50% en masse, de préférence plus de 60%, 70%, 80%, 90%, et plus préférentiellement le composé « majoritaire » représente 100% en masse.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage.

Toutes les valeurs de température de transition vitreuse « Tg » décrite dans la présente sont mesurées de manière connue par DSC (Differential Scanning Calorimetry) selon la norme ASTM D3418 (1999).

## II- DESCRIPTION DE L'INVENTION

### II -1 Stratifié

Selon l'invention, le stratifié comprend au moins deux, de préférence strictement deux, couches adjacentes, dénommées « première couche » et « deuxième couche ».

Par « couches adjacentes », on entend que les couches sont en contact, au moins en partie, l'une de l'autre.

La première couche du stratifié selon l'invention peut avoir une épaisseur comprise dans un domaine allant de 0,2 à 120 mm, de préférence de 0,3 à 15 mm.

Avantageusement, la première couche du stratifié selon l'invention a une épaisseur comprise dans un domaine allant de 0,5 à 120 mm, de préférence de 1 à 15 mm. Ces dimensions sont particulièrement intéressantes lorsque la première couche constitue une couche externe du pneumatique, telle qu'un flanc ou une bande de roulement de pneumatique.

La première couche du stratifié selon l'invention peut également avoir une épaisseur comprise dans un domaine allant de 0,2 à 10 mm, de préférence de 0,3 à 5 mm. Ces dimensions sont particulièrement intéressantes lorsque la première couche constitue une couche de liaison entre deux couches de pneumatique.

Quelle que soit l'épaisseur de la première couche, la deuxième couche a de préférence une épaisseur comprise

dans un domaine allant de 0,2 à 10 mm, de préférence de 0,3 à 7 mm.

La première et la deuxième couche du stratifié peuvent se recouvrir totalement ou partiellement.

## II-2 Composition de la première couche du stratifié

### *II-2.1 Matrice élastomère*

Selon l'invention, la première couche est constituée d'une composition de caoutchouc à base de :

◦ 20 à 100 pce d'au moins un copolymère comprenant des unités éthylène et des unités d'un 1,3-diène de formule (I), les unités éthylène dans le copolymère représentant plus de 50% en mole des unités monomères du copolymère,

$$CH_2=CR-CH=CH_2 \qquad (I)$$

le symbole R représentant une chaîne hydrocarbonée ayant 3 à 20 atomes de carbone ;
◦ 0 à 80 pce d'au moins un élastomère diénique ayant un taux massique d'unité diénique supérieur à 50% ;
◦ 10 à 100 pce d'un système plastifiant comprenant au moins un plastifiant liquide à 23°C et/ou au moins une résine plastifiante présentant une température de transition vitreuse supérieure à 20°C ;
◦ une charge renforçante ; et
o un système de réticulation.

Dans la présente, sauf indication contraire, l'expression « le copolymère » désigne « l'au moins un copolymère comprenant des unités éthylène et des unités d'un 1,3-diène de formule (I), les unités éthylène dans le copolymère représentant plus de 50% en mole des unités monomères du copolymère, $CH_2=CR-CH=CH_2$ (I), le symbole R représentant une chaîne hydrocarbonée ayant 3 à 20 atomes de carbone » pour un soucis de simplification de rédaction.

De préférence, le copolymère contient des unités éthylène qui représentent entre 50% et 95% en moles des unités monomères du copolymère, c'est-à-dire entre 50% et 95% en moles des unités éthylène et des unités du 1,3-diène. De manière très préférentielle, le copolymère contient des unités éthylène qui représentent de 60% à 90%, de préférence de 70% à 85% en moles, des unités monomères du copolymère.

Le 1,3-diène de formule (I) est un 1,3 diène substitué, qui peut donner lieu à des unités de configuration 1,2 représentée par la formule (1), de configuration 3,4 représentée par la formule (2) et de configuration 1,4 dont la forme trans est représentée ci-après par la formule (3).

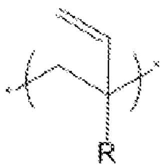
(1)

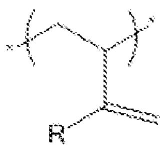
(2)

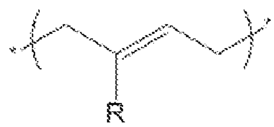
(3)

Comme cela est également bien connu, l'unité éthylène est une unité de motif « $-(CH_2-CH_2)-$ ».

Le copolymère utile aux besoins de l'invention est un copolymère comprenant des unités d'éthylène et du 1,3-diène de formule (I), ce qui implique que des unités monomères du copolymère sont des unités résultant de la polymérisation de l'éthylène et du 1,3-diène de formule (I). Le copolymère comprend donc des unités éthylène et des unités du 1,3-diène de formule (I). Selon l'invention, le 1,3-diène peut être un seul composé, c'est-à-dire un seul (en anglais « one ») 1,3-diène de formule (I) ou être un mélange de 1,3-diènes de formule (I), les 1,3-diènes du mélange se différenciant les uns des autres par le groupe représenté par le symbole R.

Le copolymère utile aux besoins de l'invention est avantageusement un copolymère statistique selon l'un quelconque des modes de réalisation de l'invention.

Dans la formule (I) du 1,3-diène, la chaîne hydrocarbonée représentée par le symbole R est une chaîne insaturée de 3 à 20 atomes de carbone. De préférence, le symbole R représente une chaîne hydrocarbonée ayant 6 à 16 atomes de carbone.

La chaîne hydrocarbonée représentée par le symbole R peut être une chaîne saturée ou insaturée. De préférence, le symbole R représente une chaîne aliphatique, auquel cas dans la formule (I) du 1,3-diène, la chaîne hydrocarbonée représentée par le symbole R est une chaîne hydrocarbonée aliphatique. Elle peut être une chaîne linéaire

ou ramifiée, auquel cas le symbole R représente une chaîne linéaire ou ramifiée. De préférence, la chaîne hydrocarbonée est acyclique, auquel cas le symbole R représente une chaîne acyclique. De préférence encore, le symbole R représente une chaîne hydrocarbonée acyclique insaturée et ramifiée. Ainsi, la chaîne hydrocarbonée représentée par le symbole R est avantageusement une chaîne acyclique insaturée et ramifiée contenant de 3 à 20 atomes de carbone, en particulier de 6 à 16 atomes de carbone. Très avantageusement, le 1,3-diène est le myrcène, le β-farnésène ou un mélange de myrcène et de β-farnésène.

Avantageusement, le copolymère contient des unités du 1,3-diène de formule (I) qui représentent entre 1% et 50%, de préférence entre 1% et 30%, de préférence entre 5% et 30%, en moles des unités monomères du copolymère.

Le copolymère peut comprendre un deuxième 1,3-diène choisi parmi le 1,3-butadiène, l'isoprène ou leur mélange. Dans ce cas, le copolymère est un copolymère d'éthylène, d'un 1,3-diène de formule (I) et d'un deuxième 1,3-diène choisi parmi le 1,3-butadiène, l'isoprène ou leur mélange, les unités monomères du copolymère sont des unités résultant de la polymérisation de l'éthylène, du 1,3-diène de formule (I) et du deuxième 1,3-diène. Le copolymère peut ainsi comprendre des unités éthylène, des unités du 1,3-diène de formule (I) et des unités du deuxième 1,3-diène. Avantageusement, le deuxième 1,3-diène du copolymère est le 1,3-butadiène.

Avantageusement, le copolymère contient des unités du deuxième 1,3-diène qui représentent entre 1% et 49%, de préférence entre 4% et 29%, de préférence entre 4% et 25%, en moles des unités monomères du copolymère.

De préférence, le copolymère présente une température transition de vitreuse inférieure à - 35°C, de préférence comprise entre -90°C et -35°C, de préférence encore entre -70°C et - 35°C.

Le copolymère peut être préparé par un procédé qui comprend la copolymérisation d'éthylène, du 1,3-diène de formule (I) et de l'éventuel deuxième 1,3-diène, en présence d'un système catalytique à base au moins d'un métallocène de formule (II) et d'un organomagnésien de formule (III)

$$P(Cp^1Cp^2)\ Nd(BH_4)_{(1+y)}\text{-}L_y\text{-}N_x \qquad (II)$$

$$MgR^1R^2 \qquad (III)$$

dans lesquels :

- $Cp^1$ et $Cp^2$, identiques ou différents, étant choisis dans le groupe constitué par le groupe cyclopentadiényle de formule $C_5H_4$ , le groupe fluorényle non substitué de formule $C_{13}H_8$ et les groupes fluorényles substitués,
- P étant un groupe pontant les deux groupes $Cp^1$ et $Cp^2$ et représentant un groupe $ZR^3R^4$, Z représentant un atome de silicium ou de carbone, $R^3$ et $R^4$, identiques ou différents, représentant chacun un groupe alkyle comprenant de 1 à 20 atomes de carbone, de préférence un méthyle,
- y, nombre entier, étant égal ou supérieur à 0,
- x, nombre entier ou non, étant égal ou supérieur à 0,
- L représentant un métal alcalin choisi dans le groupe constitué par le lithium, le sodium et le potassium,
- N représentant une molécule d'un éther, de préférence diéthyléther ou tétrahydrofuranne,
- $R^1$ et $R^2$, identiques ou différents, représentant un groupe carboné.

A titre de groupes fluorényles substitués, on peut citer ceux substitués par des radicaux alkyles ayant 1 à 6 atomes de carbone ou par des radicaux aryles ayant 6 à 12 atomes de carbone. Le choix des radicaux est aussi orienté par l'accessibilité aux molécules correspondantes que sont les fluorènes substitués, parce que ces derniers sont disponibles commercialement ou facilement synthétisables.

A titre de groupes fluorényles substitués, on peut citer plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

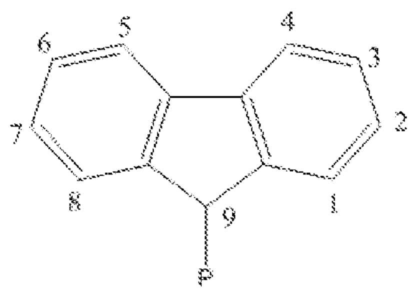

Le système catalytique peut être préparé de façon traditionnelle par un procédé analogue à celui décrit dans la demande de brevet WO 2007054224 ou WO 2007054223. Par exemple on fait réagir dans un solvant hydrocarboné l'organomagnésien et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du copolymère conforme à l'invention.

Alternativement, le système catalytique peut être préparé par un procédé analogue à celui décrit dans la demande de brevet WO 2017093654 A1 ou dans la demande de brevet WO 2018020122 A1. Selon cette alternative, le système catalytique contient en outre un monomère de préformation choisi parmi un diène conjugué, l'éthylène ou un mélange d'éthylène et d'un diène conjugué, auquel cas le système catalytique est à base au moins du métallocène, de l'organomagnésien et du monomère de préformation. Par exemple on fait réagir dans un solvant hydrocarboné l'organomagnésien et le métallocène typiquement à une température de 20 à 80°C pendant 10 à 20 minutes pour obtenir un premier produit de réaction, puis avec ce premier produit de réaction on fait réagir à une température allant de 40 à 90°C pendant 1h à 12h le monomère de préformation choisi parmi un diène conjugué, l'éthylène ou un mélange d'éthylène et d'un diène conjugué. Le diène conjugué à titre de monomère de préformation est de préférence un 1,3-diène tel que le 1,3-butadiène, l'isoprène ou encore un 1,3-diène de formule (I), en particulier le myrcène ou le $\beta$-farnésène. Le système catalytique ainsi obtenu peut être utilisé de suite dans le procédé conforme à l'invention ou être stocké sous atmosphère inerte avant son utilisation dans le procédé conforme à l'invention.

Le métallocène utilisé pour préparer le système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224 ou WO 2007054223. Le métallocène peut être préparé de façon traditionnelle par un procédé analogue à celui décrit dans la demande de brevet WO 2007054224 ou WO 2007054223, notamment par réaction dans des conditions inertes et anhydres du sel d'un métal alcalin du ligand avec un borohydrure de terre rare dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Comme toute synthèse faite en présence de composé organométallique, la synthèse du métallocène et celle du système catalytique ont lieu dans des conditions anhydres sous atmosphère inerte. Typiquement, les réactions sont conduites à partir de solvants et de composés anhydres sous azote ou argon anhydre.

L'organomagnésien utile aux besoins de l'invention est de formule $MgR^1R^2$ dans laquelle $R^1$ et $R^2$, identiques ou différents, représentent un groupe carboné. On entend par groupe carboné un groupe qui contient un ou plusieurs atomes de carbone. De préférence, $R^1$ et $R^2$ contiennent 2 à 10 atomes de carbone. De manière plus préférentielle, $R^1$ et $R^2$ représentent chacun un alkyle. L'organomagnésien est avantageusement un dialkylmagnésien, mieux le butyléthylmagnésium ou le butyloctylmagnésium, encore mieux le butyloctylmagnésium.

Selon l'un quelconque des modes de réalisation de l'invention, le rapport molaire de l'organomagnésien sur le métal Nd constituant le métallocène est de préférence compris dans un domaine allant de 1 à 100, de manière plus préférentielle est supérieur ou égal à 1 et inférieur à 10. La plage de valeurs allant de 1 à moins de 10 est notamment plus favorable pour l'obtention de copolymères de masses molaires élevées.

Lorsque le copolymère utile aux besoins de l'invention est un copolymère qui a une microstructure telle que définie selon la première variante de l'invention, il est préparé selon le procédé mentionné dans la présente demande en utilisant un métallocène de formule (II) dans laquelle $Cp^1$ et $Cp^2$, identiques ou différents, sont choisis dans le groupe constitué par les groupes fluorényles substitués et le groupe fluorényle non substitué de formule $C_{13}H_8$. Pour cette variante, conviennent en particulier les métallocènes de formules suivantes dans lesquelles le symbole Flu présente le groupe fluorényle de formule $C_{13}H_8$ : $[\{Me_2SiFlu_2Nd(\mu\text{-}BH_4)_2Li(THF)\}_2]$ ; $[Me_2SiFlu_2Nd(\mu\text{-}BH_4)_2Li(THF)]$ ; $[Me_2SiFlu_2Nd(\mu\text{-}BH_4)(THF)]$ ; $[\{Me_2SiFlu_2Nd(\mu\text{-}BH_4)(THF)\}_2]$ ; $[Me_2SiFlu_2Nd(\mu\text{-}BH_4)]$.

L'homme du métier sait adapter aussi les conditions de polymérisation et les concentrations en chacun des réactifs (constituants du système catalytique, monomères) selon le matériel (outils, réacteurs) utilisé pour conduire la polymérisation et les différentes réactions chimiques. Comme cela est connu de l'homme du métier, la copolymérisation ainsi que la manipulation des monomères, du système catalytique et du ou des solvants de polymérisation se font dans des conditions anhydres et sous atmosphère inerte. Les solvants de polymérisation sont typiquement des solvants hydrocarbonés, aliphatiques ou aromatiques.

La polymérisation est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. Les monomères peuvent être introduits dans le réacteur contenant le solvant de polymérisation et le système catalytique ou inversement le système catalytique peut être introduit dans le réacteur contenant le solvant de polymérisation et les monomères. La copolymérisation est conduite typiquement dans des conditions anhydres et en l'absence d'oxygène, en présence éventuelle d'un gaz inerte. La température de polymérisation

varie généralement dans un domaine allant de 30 à 150°C, préférentiellement de 30 à 120°C. De préférence, la copolymérisation est conduite à pression constante d'éthylène.

Au cours de la polymérisation de l'éthylène, du 1,3-diène de formule (I) et de l'éventuel deuxième 1,3-diène, dans un réacteur de polymérisation, un ajout continu d'éthylène et du 1,3-diène de formule (I) et de l'éventuel deuxième 1,3-diène, peut être réalisé dans le réacteur de polymérisation, auquel cas le réacteur de polymérisation est un réacteur alimenté. Ce mode de réalisation est tout particulièrement adapté pour la synthèse de copolymère statistique.

La polymérisation peut être stoppée par refroidissement du milieu de polymérisation. Le polymère peut être récupéré selon les techniques classiques connues de l'homme du métier comme par exemple par précipitation, par évaporation du solvant sous pression réduite ou par stripping à la vapeur d'eau.

La matrice élastomère de la composition de la première couche du stratifié selon l'invention peut comprendre majoritairement le copolymère comprenant des unités éthylène et des unités d'un 1,3-diène de formule (I). Dans ce cas, le taux du copolymère comprenant des unités éthylène et des unités d'un 1,3-diène de formule (I) dans la composition de la première couche est avantageusement compris dans un domaine allant de plus de 50 à 100 pce, de préférence de 75 à 100 pce, de préférence encore de 90 à 100 pce. Le taux du copolymère comprenant des unités éthylène et des unités d'un 1,3-diène de formule (I) dans la composition de la première couche peut avantageusement être de 100 pce, c'est-à-dire que la matrice élastomère de la composition de la première couche du stratifié ne comprend pas d'autre élastomère que le copolymère comprenant des unités éthylène et des unités d'un 1,3-diène de formule (I). Il est entendu que le copolymère peut être constitué par un mélange de copolymères qui se différencient par leur microstructure ou par leur macrostructure. Lorsque la matrice élastomère de la composition de la première couche comprend majoritairement le copolymère comprenant des unités éthylène et des unités d'un 1,3-diène de formule (I), le taux de l'élastomère diénique ayant un taux massique d'unité diénique supérieur à 50% dans la composition de la première couche du stratifié selon l'invention peut être compris dans un domaine allant de 0 à moins de 50 pce, de préférence de 0 à 25 pce, de préférence encore de 0 à 10 pce.

La matrice élastomère de la composition de la première couche du stratifié selon l'invention comprend avantageusement un mélange du copolymère comprenant des unités éthylène et des unités d'un 1,3-diène de formule (I) et d'au moins un élastomère diénique ayant un taux massique d'unité diénique supérieur à 50%. Avantageusement, la composition de la première couche du stratifié selon l'invention comprend de 20 à 90 pce, de préférence de 25 à 80 pce, de préférence encore de 30 à 80 pce, du copolymère comprenant des unités éthylène et des unités d'un 1,3-diène de formule (I). Il est entendu que le copolymère peut être constitué par un mélange de copolymères qui se différencient par leur microstructure ou par leur macrostructure. Dans ce cas, le taux de l'élastomère diénique ayant un taux massique d'unité diénique supérieur à 50% dans la composition de la première couche du stratifié selon l'invention est avantageusement compris dans un domaine allant de 10 à 80 pce, de préférence de 20 à 75 pce, de préférence encore de 20 à 70 pce.

On entend par unité diénique une unité monomère issue de l'insertion d'un motif monomère résultant de la polymérisation d'un monomère diène conjugué ou d'un monomère diène non conjugué, l'unité diénique comportant une double liaison carbone-carbone.

Avantageusement, l'élastomère diénique ayant un taux massique d'unité diénique supérieur à 50% de la composition de la première couche est choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères.

De préférence, l'élastomère diénique ayant un taux massique d'unité diénique supérieur à 50% de la composition de la première couche est choisi dans le groupe constitué par les élastomères isopréniques.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

Avantageusement, l'élastomère isoprénique est un polyisoprène comportant un taux massique de liaisons 1,4-cis d'au moins 90%, de préférence d'au moins 98%, de la masse du polyisoprène.

De préférence, le polyisoprène est choisi dans le groupe constitué par le caoutchouc naturel, les polyisoprènes de synthèse et leurs mélanges. De préférence encore le polyisoprène est un caoutchouc naturel.

### *II-2.2 Système plastifiant*

La composition de caoutchouc de la première couche du stratifié selon l'invention comprend en outre 10 à 100 pce d'un système plastifiant comprenant au moins un plastifiant liquide à 23°C, dit à « basse Tg », c'est-à-dire qui par définition présente une Tg inférieure à -20°C, de préférence inférieur à -40°C et/ou une résine plastifiante présentant une température de transition vitreuse supérieure à 20°C, dite « haute Tg », (également dénommée « résine plastifiante » dans la présente dans un souci de simplification de rédaction).

Avantageusement, le taux du système plastifiant comprenant au moins un plastifiant liquide à 23°C et/ou au moins une résine plastifiante présentant une température de transition vitreuse supérieure à 20°C, dans la composition de

la première couche du stratifié selon l'invention, est compris dans un domaine allant de 35 à 100 pce, de préférence de 50 à 95 pce, de préférence encore de 55 à 90 pce.

Avantageusement, le système plastifiant de la composition de la première couche du stratifié selon l'invention comprend au moins une résine plastifiante présentant une température de transition vitreuse supérieure à 20°C, de préférence il comprend à la fois un plastifiant liquide à 23°C et une résine plastifiante présentant une température de transition vitreuse supérieure à 20°C.

*II-2.2.a Résine plastifiante*

La dénomination « résine » est réservée dans la présente demande, par définition connue de l'homme du métier, à un composé qui est solide à température ambiante (23°C), par opposition à un composé plastifiant liquide tel qu'une huile.

Les résines plastifiantes sont des polymères bien connus de l'homme du métier, essentiellement à base de carbone et hydrogène mais pouvant comporter d'autres types d'atomes, utilisables en particulier comme agents plastifiants ou agents tackifiants dans des matrices polymériques. Elles sont généralement par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods*"). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 20°C (le plus souvent comprise entre 30°C et 95°C).

De manière connue, ces résines plastifiantes peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*). La température de ramollissement d'une résine plastifiante est généralement supérieure d'environ 50 à 60°C à sa valeur de Tg. Le point de ramollissement est mesuré selon la norme ISO 4625 (méthode « Ring and Ball »). La macrostructure (Mw, Mn et Ip) est déterminée par chromatographie d'exclusion stérique (SEC) comme indiqué ci-après.

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, le tétrahydrofurane à une concentration de 1 g/litre. Puis la solution est filtrée sur un filtre de porosité 0,45 μm, avant injection dans l'appareillage. L'appareillage utilisé est par exemple une chaîne chromatographique "Waters alliance" selon les conditions suivantes :

- solvant d'élution est le tétrahydrofurane,
- température 35°C ;
- concentration 1 g/litre ;
- débit : 1 ml/min ;
- volume injecté : 100 μl ;
- étalonnage de Moore avec des étalons de polystyrène ;
- jeu de 3 colonnes "Waters" en série ("Styragel HR4E", "Styragel HR1" et "Styragel HR 0.5") ;
- détection par réfractomètre différentiel (par exemple "WATERS 2410") pouvant être équipé d'un logiciel d'exploitation (par exemple "Waters Millenium").

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn).

Toutes les valeurs de masses molaires indiquées dans la présente demande sont donc relatives à des courbes d'étalonnages réalisées avec des étalons de polystyrène.

Selon un mode de réalisation préférentiel de l'invention, la résine plastifiante présente au moins une quelconque, de préférence 2 ou 3, plus préférentiellement l'ensemble, des caractéristiques suivantes :

- une Tg supérieure à 25°C (en particulier compris entre 30°C et 100°C), plus préférentiellement supérieure à 30°C (en particulier compris entre 30°C et 95°C) ;
- un point de ramollissement supérieur à 50°C (en particulier compris entre 50°C et 150°C) ;

- une masse molaire moyenne en nombre (Mn) comprise entre 300 et 2000 g/mol, préférentiellement entre 400 et 1500 g/mol ;
- un indice de polymolécularité (Ip) inférieur à 3, préférentiellement à 2 (rappel : Ip = Mw/Mn avec Mw masse molaire moyenne en poids).

Les résines plastifiantes de haute Tg préférentielles ci-dessus sont bien connues de l'homme du métier et disponibles commercialement, par exemple vendues en ce qui concerne les :

- résines polylimonène : par la société DRT sous la dénomination "Dercolyte L120" (Mn=625 g/mol ; Mw=1010 g/mol ; Ip=1,6 ; Tg=72°C) ou par la société ARIZONA sous la dénomination "Sylvagum TR7125C" (Mn=630 g/mol ; Mw=950 g/mol ; Ip=1,5 ; Tg=70°C) ;
- résines de copolymère coupe C5/ vinylaromatique, notamment coupe C5/ styrène ou coupe C5/ coupe C9 : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "Escorez 1273" ;
- résines de copolymère limonène/ styrène : par DRT sous dénomination "Dercolyte TS 105" de la société DRT, par ARIZONA Chemical Company sous dénominations "ZT115LT" et "ZT5100".

Selon l'invention la résine plastifiante présentant une température de transition vitreuse supérieure à 20°C peut être choisie dans le groupe comprenant ou constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et leurs mélanges. De préférence, la résine plastifiante est choisie dans le groupe comprenant ou constitué par les résines de copolymère (D)CPD/ vinylaromatique, les résines de copolymère (D)CPD/ terpène, les résines de copolymère terpène phénol, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, et leurs mélanges.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe $C_9$ (ou plus généralement d'une coupe $C_8$ à $C_{10}$).

Plus particulièrement, on peut citer les résines plastifiantes choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines plastifiantes ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe $C_5$/ styrène ou résines coupe $C_5$/ coupe $C_9$, ou encore par la société Struktol sous dénomination "40 MS" ou "40 NS" (mélanges de résines aromatiques et/ou aliphatiques).

Avantageusement, le taux de résine plastifiante présentant une température de transition vitreuse supérieure à 20°C dans la composition de la première couche du stratifié selon l'invention est compris dans un domaine allant de 1 à 99 pce, de préférence de 5 à 95 pce, de préférence de 10 à 90 pce, de préférence de 15 à 85 pce. L'homme du métier comprend bien que lorsque le taux de la résine plastifiante présentant une température de transition vitreuse supérieure à 20°C est inférieur au taux minimum du système plastifiant comprenant au moins un plastifiant liquide à 23°C et/ou au moins une résine plastifiante présentant une température de transition vitreuse supérieure à 20°C, la composition comprend au moins le complément du plastifiant liquide à 23°C. Lorsque la composition de la première couche du stratifié selon l'invention ne comprend pas de plastifiant liquide à 23°C, le taux de la résine présentant une température de transition vitreuse supérieure à 20°C dans la composition est avantageusement compris dans un domaine allant de 10 à 90 pce, de préférence de 15 à 85 pce, de préférence de 20 à 80 pce.

*II-2.2.b Plastifiant liquide à 23°C*

Tout plastifiant liquide à 23°C (ou huile d'extension), qu'il soit de nature aromatique ou non-aromatique, connu pour ses propriétés plastifiantes vis-à-vis d'élastomères diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes qui sont par nature solides à température ambiante.

Conviennent particulièrement les plastifiants liquides à 23°C choisis dans le groupe comprenant ou constitué par les polymères diéniques liquides, les huiles polyoléfiniques, les huiles naphténiques, les huiles paraffiniques, les huiles DAE, les huiles MES (*Medium Extracted Solvates*), les huiles TDAE (*Treated Distillate Aromatic Extracts*), les huiles RAE (*Residual Aromatic Extract oils*), les huiles TRAE (*Treated Residual Aromatic Extract*) et les huiles SRAE (*Safety Residual Aromatic Extract oils*), les huiles minérales, les huiles végétales, les plastifiants éthers, les plastifiants esters, les plastifiants phosphates, les plastifiants sulfonates et les mélanges de ces plastifiants liquides à 23°C.

Par exemple, le plastifiant liquide à 23°C peut être une huile de pétrole, de préférence non aromatique. Un plastifiant liquide est qualifié de non aromatique dès lors qu'il présente une teneur en composés aromatiques polycycliques, déterminée avec l'extrait dans du DMSO selon la méthode IP 346, de moins de 3 % en poids, par rapport au poids total du plastifiant.

Le plastifiant liquide à 23°C peut également être un polymère liquide issu de la polymérisation d'oléfines ou de diènes, comme les polybutènes, les polydiènes, en particulier les polybutadiènes, les polyisoprènes (connus également sous l'appellation « LIR ») ou les copolymères de butadiène et d'isoprène, ou encore les copolymères de butadiène ou d'isoprène et de styrène ou les mélanges de ces polymères liquides. La masse molaire moyenne en nombre de tels polymères liquides est comprise préférentiellement dans un domaine allant de 500 g/mol à 50 000 g/mol, préférentiellement de 1 000 g/mol à 10 000 g/mol. A titre d'exemple peuvent être cités les produits « RICON » de SARTOMER.

Lorsque le plastifiant liquide à 23°C est une huile végétale, il peut s'agir par exemple d'une huile choisie dans le groupe comprenant ou constitué par les huiles de lin, carthame, soja, maïs, coton, navette, ricin, abrasin, pin, tournesol, palme, olive, noix de coco, arachide, pépin de raisin et les mélanges de ces huiles. L'huile végétale est préférentiellement riche en acide oléique, c'est-à-dire que l'acide gras (ou l'ensemble des acides gras si plusieurs sont présents) dont elle dérive, comporte de l'acide oléique selon une fraction massique au moins égale à 60%, encore plus préférentiellement selon une fraction massique au moins égale à 70%. A titre d'huile végétale, est utilisée avantageusement une huile de tournesol qui est telle que l'ensemble des acides gras dont elle dérive comprend l'acide oléique selon une fraction massique égale ou supérieure à 60%, de préférence à 70% et, selon un mode particulièrement avantageux de réalisation de l'invention, selon une fraction massique égale ou supérieure à 80%.

Selon un autre mode de réalisation particulier de l'invention, le plastifiant liquide est un triester choisi dans le groupe constitué par les triesters d'acide carboxylique, d'acide phosphorique, d'acide sulfonique et les mélanges de ces triesters.

A titre d'exemple de plastifiants phosphates, on peut citer ceux qui contiennent entre 12 et 30 atomes de carbone, par exemple le trioctyle phosphate. A titre d'exemples de plastifiants esters d'acide carboxylique, on peut citer notamment les composés choisis dans le groupe constitué par les trimellitates, les pyromellitates, les phtalates, les 1,2-cyclohexane dicarboxylates, les adipates, les azélates, les sébaçates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en $C_{18}$, c'est-à-dire choisi dans le groupe constitué par l'acide oléique, l'acide linoléique, l'acide linolénique et les mélanges de ces acides. Le triester de glycérol est préféré. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Lorsque le plastifiant liquide à 23°C est un plastifiant éther, il peut s'agir par exemple de polyéthylène glycol ou de polypropylène glycol.

De préférence, le plastifiant liquide à 23°C est choisi dans le groupe comprenant ou constitué par les huiles MES, les huiles TDAE, les huiles naphténiques, les huiles végétales et les mélanges de ces plastifiants liquides à 23°C. De préférence encore, le plastifiant liquide à 23°C est une huile végétale, de préférence une huile de tournesol.

Avantageusement également, la composition de la première couche du stratifié selon l'invention ne comprend pas de polymère liquide.

De manière avantageuse, le taux de plastifiant liquide à 23°C, dans la composition de la première couche du stratifié selon l'invention, est compris dans un domaine allant de 1 à 49 pce, de préférence de 5 à 40 pce. L'homme du métier comprend bien que lorsque le taux du plastifiant liquide à 23°C est inférieur au taux minimum du système plastifiant comprenant au moins un plastifiant liquide à 23°C et/ou au moins une résine plastifiante présentant une température de

transition vitreuse supérieure à 20°C, la composition comprend au moins le complément de la résine plastifiante présentant une température de transition vitreuse supérieure à 20°C. Lorsque la composition de la première couche du stratifié selon l'invention ne comprend pas de résine présentant une température de transition vitreuse supérieure à 20°C, le taux du plastifiant liquide à 23°C dans la composition est avantageusement compris dans un domaine allant de 20 à 49 pce, de préférence de 30 à 49 pce.

*II-2.3 Charge renforçante*

La composition de la première couche du stratifié conforme à l'invention peut en outre comprendre une charge renforçante. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

La charge renforçante peut comprendre du noir de carbone, de la silice ou un de leurs mélanges. La composition de la première couche du stratifié selon l'invention peut être majoritairement constituée de silice. Alternativement, elle peut être majoritairement, de préférence exclusivement, constituée de noir de carbone.

Le taux de charge renforçante est ajusté par l'homme du métier en fonction de l'usage de la composition de caoutchouc. Avantageusement, le taux de charge renforçante, dans la composition de la première couche du stratifié selon l'invention, est compris dans un domaine allant de 30 à 200 pce, de préférence de 40 à 190 pce, de préférence de 50 à 180 pce.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772. Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un mélange-maître (« masterbatch » en anglais) (voir par exemple demandes WO97/36724-A2 ou WO99/16600-A1).

Comme silices conviennent tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ® 5000GR », « Ultrasil ® 7000GR » de la société Evonik, les silices « Zeosil ® 1085GR», « Zeosil® 1115 MP », « Zeosil® 1165MP », « Zeosil® Premium 200MP », « Zeosil® HRS 1200 MP » de la Société Solvay. À titre de silice non HDS, les silices commerciales suivantes peuvent être utilisées : les silices « Ultrasil ® VN2GR », « Ultrasil ® VN3GR » de la société Evonik, la silice « Zeosil® 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

Pour coupler la silice à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, ledit premier groupe fonctionnel étant apte à interagir avec les groupes hydroxyles d'une charge inorganique et un second groupe fonctionnel comprenant un atome de soufre, ledit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle)commercialisé par la société Momentive sous la dénomination « NXT Silane ». Plus préférentiellement, l'organosilane est un organosilane polysulfuré.

Lorsque de la silice est utilisée, la teneur en agent de couplage dans la composition de la première couche du stratifié de l'invention peut aisément être ajustée par l'homme du métier. Typiquement le taux d'agent de couplage représente de 0,5% à 15% en poids par rapport à la quantité de silice.

*II-2.4 Système de réticulation*

Le système de réticulation peut être tout type de système connu de l'homme de l'art dans le domaine des

compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tel que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0.3 pce et 10 pce, plus préférentiellement entre 0.3 et 5 pce. L'accélérateur primaire de vulcanisation est utilisé à un taux préférentiel compris entre 0.5 et 10 pce, plus préférentiellement compris entre 0.5 et 5 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

*II-2.5 Additifs possibles*

La composition de la première couche du stratifié utile aux besoins de l'invention peut comporter également tout ou partie des additifs usuels habituellement utilisés dans les compositions d'élastomères destinées à être utilisées dans un pneumatique, comme par exemple des agents de mise en œuvre, des pigments, des agents de protection tels que cires anti-ozone, anti-ozonants chimiques, anti-oxydants.

II-3 Composition de la deuxième couche du stratifié

*II-3.1 Matrice élastomère*

Selon l'invention, la deuxième couche est constituée d'une composition de caoutchouc à base d'un élastomère diénique ayant un taux massique d'unité diénique supérieur à 50% et d'un système de réticulation.

Avantageusement, l'élastomère diénique ayant un taux massique d'unité diénique supérieur à 50% de la composition de la deuxième couche est choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères.

De préférence, l'élastomère diénique ayant un taux massique d'unité diénique supérieur à 50% de la composition de la deuxième couche est choisi dans le groupe constitué par les élastomères isopréniques.

Avantageusement, l'élastomère isoprénique est un polyisoprène comportant un taux massique de liaisons 1,4-cis d'au moins 90%, de préférence d'au moins 98%, de la masse du polyisoprène.

De préférence, le polyisoprène est choisi dans le groupe constitué par le caoutchouc naturel, les polyisoprènes de synthèse et leurs mélanges. De préférence encore le polyisoprène est un caoutchouc naturel.

De manière particulièrement avantageuse, l'élastomère diénique ayant un taux massique d'unité diénique supérieur à 50% de la première couche et l'élastomère diénique ayant un taux massique d'unité diénique supérieur à 50% de la deuxième couche sont des polyisoprènes, qui peuvent être identiques ou différents. De préférence, l'élastomère diénique ayant un taux massique d'unité diénique supérieur à 50% de la première couche et l'élastomère diénique ayant un taux massique d'unité diénique supérieur à 50% de la deuxième couche sont des polyisoprènes comportant un taux massique de liaisons 1,4-cis d'au moins 90%, de préférence d'au moins 98%, de la masse du polyisoprène.

Avantageusement, la matrice élastomère de la composition de la deuxième couche du stratifié selon l'invention comprend majoritairement l'élastomère diénique ayant un taux massique d'unité diénique supérieur à 50%. Le taux de l'élastomère diénique ayant un taux massique d'unité diénique supérieur à 50% dans la composition de la deuxième couche du stratifié selon l'invention est avantageusement compris dans un domaine allant de 60 à 100 pce, de préférence de 80 à 100 pce, de préférence encore de 90 à 100 pce. De manière particulièrement avantageuse, le taux de l'élastomère diénique ayant un taux massique d'unité diénique supérieur à 50% dans la composition de la deuxième couche du stratifié selon l'invention est de 100 pce.

*II-3.2 Charge renforçante*

La composition de la deuxième couche du stratifié conforme à l'invention peut en outre comprendre une charge renforçante. La charge renforçante de la deuxième couche peut comprendre du noir de carbone, de la silice ou un de leurs mélanges. Avantageusement, la composition de la deuxième couche du stratifié selon l'invention est majoritairement, de préférence exclusivement, constituée de noir de carbone. La composition de la deuxième couche du stratifié selon l'invention pourrait alternativement être majoritairement constituée de silice.

Le taux de charge renforçante est ajustée par l'homme du métier en fonction de l'usage de la composition de caoutchouc. Avantageusement, le taux de charge renforçante, dans la composition de la deuxième couche du stratifié selon l'invention, est compris dans un domaine allant de 20 à 80 pce, de préférence de 25 à 70 pce, de préférence de 30 à 60 pce.

La nature de la charge renforçante peut être telle que décrite précédemment pour la composition de la première couche du stratifié, sans pour autant que la charge renforçante de la première couche et celle de la deuxième couche soient nécessairement identiques.

Lorsque de la silice est utilisée dans la deuxième couche du stratifié selon l'invention, la teneur en agent de couplage dans la composition de la deuxième couche du stratifié de l'invention peut aisément être ajustée par l'homme du métier. Typiquement le taux d'agent de couplage représente de 0,5% à 15% en poids par rapport à la quantité de silice.

*II-3.3 Système de réticulation*

Le système de réticulation peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tel que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0.3 pce et 10 pce, plus préférentiellement entre 0.3 et 5 pce. L'accélérateur primaire de vulcanisation est utilisé à un taux préférentiel compris entre 0.5 et 10 pce, plus préférentiellement compris entre 0.5 et 5 pce.

On peut utiliser comme accélérateur tout composé susceptible d'agir comme accélérateur de vulcanisation des élastomères diéniques en présence de soufre, ceux décrits précédemment pour la composition de la première couche du stratifié, sans pour autant que ces accélérateurs soient nécessairement identiques.

*II-3.4 Additifs possibles*

La composition de la deuxième couche du stratifié utile aux besoins de l'invention peut également comporter tout ou partie des additifs usuels habituellement utilisés dans les compositions d'élastomères destinées à être utilisées dans un pneumatique, comme par exemple des agents de mise en œuvre, des plastifiants, des pigments, des agents de protection tels que cires anti-ozone, anti-ozonants chimiques, anti-oxydants.

II-4 Préparation des compositions de caoutchouc

Les compositions utilisables dans le stratifié selon l'invention peuvent être fabriquées dans des mélangeurs appropriés, en utilisant deux phases de préparation successives bien connues de l'homme du métier :

- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type « Banbury »), tous les constituants nécessaires, notamment la matrice élastomère, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels additifs divers autres que le système de réticulation. La phase non-productive peut être réalisée à

haute température, jusqu'à une température maximale comprise entre 110°C et 200°C, de préférence entre 130°C et 185°C, pendant une durée généralement comprise entre 2 et 10 minutes.

- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C. On incorpore alors le système de réticulation, et le tout est alors mélangé pendant quelques minutes, par exemple entre 5 et 15 min.

De telles phases ont été décrites par exemple dans les demandes EP-A-0501227, EP-A-0735088, EP-A-0810258, WO00/05300 ou WO00/05301.

La composition finale ainsi obtenue est ensuite calandrée par exemple sous la forme d'une feuille ou d'une plaque, notamment pour une caractérisation au laboratoire, ou encore extrudée (ou co-extrudée avec une autre composition de caoutchouc) sous la forme d'un semi-fini (ou profilé) de caoutchouc. La première et la deuxième couche peuvent être produites séparément, puis disposées l'une sur l'autre lors de la confection du pneumatique, selon les techniques connues de l'homme du métier.

Les compositions du stratifié peuvent être soit à l'état cru (avant réticulation ou vulcanisation), soit à l'état cuit (après réticulation ou vulcanisation). Le stratifié peut être un produit semi-fini qui peut être utilisé dans un pneumatique.

La réticulation (ou cuisson), le cas échéant la vulcanisation, est conduite de manière connue à une température généralement comprise entre 130°C et 200°C, pendant un temps suffisant qui peut varier par exemple entre 5 et 90 min en fonction notamment de la température de cuisson, du système de réticulation adopté et de la cinétique de réticulation de la composition considérée.

II-5 Article en caoutchouc

La présente invention a également pour objet un article de caoutchouc comprenant au moins un stratifié selon l'invention. L'article de caoutchouc peut être choisi dans le groupe constitué par les bandages pneumatiques, les bandages non pneumatiques, les chenilles, les bandes convoyage et les articles antivibratoires. De préférence, l'article de caoutchouc est choisi dans le groupe constitué par les bandages pneumatiques, les bandages non pneumatiques et les bandes de convoyages. De préférence encore, l'article de caoutchouc est un bandage pneumatique ou non-pneumatique.

Plus particulièrement, l'invention a également pour objet un bandage pneumatique ou non pneumatique pourvu d'une bande de roulement comprenant la composition de la première couche du stratifié selon l'invention. De préférence, la première couche du stratifié constitue une partie ou la totalité de la bande de roulement du pneumatique et la deuxième couche du stratifié constitue une partie ou la totalité d'une sous-couche à la bande de roulement.

L'invention a également pour objet un bandage pneumatique dans lequel la première couche du stratifié constitue une partie ou la totalité d'au moins un flanc du pneumatique et la deuxième couche du stratifié constitue une partie ou la totalité d'une nappe carcasse.

Le pneumatique selon l'invention peut être destiné à équiper tout type de véhicules, en particulier des véhicules à moteur, sans limitation particulière.

## III- MODES DE REALISATION PREFERES

Au vu de ce qui précède, les modes de réalisations préférés de l'invention sont décrits ci-dessous :

1. Stratifié élastomère comprenant au moins deux couches adjacentes :

- la première couche étant constituée d'une composition de caoutchouc à base de :

  ◦ 20 à 100 pce d'au moins un copolymère comprenant des unités éthylène et des unités d'un 1,3-diène de formule (I), les unités éthylène dans le copolymère représentant plus de 50% en mole des unités monomères du copolymère,

$$CH_2{=}CR{-}CH{=}CH_2 \qquad (I)$$

  le symbole R représentant une chaîne hydrocarbonée ayant 3 à 20 atomes de carbone ;

  ◦ 0 à 80 pce d'au moins un élastomère diénique ayant un taux massique d'unité diénique supérieur à 50% ;

  ◦ 10 à 100 pce d'un système plastifiant comprenant au moins une résine plastifiante présentant une température de transition vitreuse supérieure à 20°C et/ou au moins un plastifiant liquide à 23°C;

◦ une charge renforçante ; et
◦ un système de réticulation,

- la deuxième couche étant constituée d'une composition de caoutchouc à base d'un élastomère diénique ayant un taux massique d'unité diénique supérieur à 50% et d'un système de réticulation.

2. Stratifié selon la réalisation 1, dans lequel le copolymère de la première couche contient des unités éthylène qui représentent entre 50% et 95%, de préférence de 60% à 90%, de préférence de 70% à 85%, en moles des unités monomères du copolymère.
3. Stratifié selon l'une quelconque des réalisations précédentes, dans lequel le symbole R du copolymère de la première couche représente une chaîne hydrocarbonée ayant 6 à 16 atomes de carbone.
4. Stratifié selon l'une quelconque des réalisations précédentes, dans lequel le symbole R du copolymère de la première couche représente une chaîne aliphatique.
5. Stratifié selon l'une quelconque des réalisations précédentes, dans lequel le symbole R du copolymère de la première couche représente une chaîne acyclique.
6. Stratifié selon l'une quelconque des réalisations précédentes, dans lequel le symbole R du copolymère de la première couche représente une chaîne linéaire ou ramifiée.
7. Stratifié selon l'une quelconque des réalisations précédentes, dans lequel le 1,3-diène de formule (I) du copolymère de la première couche est le myrcène, le β-farnésène ou un mélange de myrcène et de β-farnésène.
8. Stratifié selon l'une quelconque des réalisations précédentes, dans lequel le copolymère de la première couche contient des unités du 1,3-diène de formule (I) qui représentent entre 1% et 50%, de préférence entre 1% et 30%, de préférence entre 5% et 30%, en moles des unités monomères du copolymère.
9. Stratifié selon l'une quelconque des réalisations précédentes, dans lequel le copolymère est un copolymère comprenant en outre un deuxième 1,3-diène choisi parmi le 1,3-butadiène, l'isoprène ou leur mélange.
10. Stratifié selon la réalisation 9, dans lequel le deuxième 1,3-diène du copolymère est le 1,3-butadiène.
11. Stratifié selon l'une quelconque des réalisations 9 à 10, dans lequel le copolymère de la première couche contient des unités du deuxième 1,3-diène qui représentent entre 1% et 49%, de préférence entre 4% et 29%, de préférence entre 4% et 25%, en moles des unités monomères du copolymère.
12. Stratifié selon l'une quelconque des réalisations précédentes, dans lequel le copolymère est un copolymère statistique.
13. Stratifié selon l'une quelconque des réalisations précédentes, dans lequel le copolymère de la première couche présente une température de transition vitreuse inférieure à -35°C, de préférence comprise entre -90°C et -35°C, de préférence entre - 70°C et -35°C.
14. Stratifié selon l'une quelconque des réalisations précédentes, dans lequel le taux du copolymère d'éthylène et d'un 1,3-diène de formule (I) dans la composition de la première couche est compris dans un domaine allant de plus de 50 à 100 pce, de préférence de 75 à 100 pce, de préférence encore de 90 à 100 pce.
15. Stratifié selon la réalisation 14, dans lequel l'élastomère diénique ayant un taux massique d'unité diénique supérieur à 50% est présent dans la composition de la première couche à un taux compris dans un domaine allant de 0 à moins de 50 pce, de préférence de 0 à 25 pce, de préférence encore de 0 à 10 pce.
16. Stratifié selon l'une quelconque des réalisations 1 à 13, dans lequel le taux du copolymère d'éthylène et d'un 1,3-diène de formule (I) dans la composition de la première couche est compris dans un domaine allant de 20 à 90 pce, de préférence de 25 à 80 pce, de préférence encore de 30 à 80 pce.
17. Stratifié selon la réalisation 16, dans lequel l'élastomère diénique ayant un taux massique d'unité diénique supérieur à 50% est présent dans la composition de la première couche à un taux compris dans un domaine allant de 10 à 80 pce, de préférence de 20 à 75 pce, de préférence encore de 20 à 70 pce.
18. Stratifié selon l'une quelconque des réalisations précédentes, dans lequel la composition de la première couche ne comprend pas d'autre élastomère que le copolymère d'éthylène et d'un 1,3-diène de formule (I) et l'élastomère diénique ayant un taux massique d'unité diénique supérieur à 50%.
19. Stratifié selon l'une quelconque des réalisations précédentes, dans lequel l'élastomère diénique ayant un taux massique d'unité diénique supérieur à 50% de la composition de la première couche est choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères.
20. Stratifié selon l'une quelconque des réalisations précédentes, dans lequel l'élastomère diénique ayant un taux massique d'unité diénique supérieur à 50% de la composition de la première couche est un polyisoprène, de préférence comportant un taux massique de liaisons 1,4-cis d'au moins 90%, de préférence d'au moins 98%, de la masse du polyisoprène.
21. Stratifié selon la réalisation 20, dans lequel le polyisoprène de la composition de la première couche est choisi dans le groupe constitué par le caoutchouc naturel, les polyisoprènes de synthèse ou leurs mélanges.

22. Stratifié selon l'une quelconque des réalisations précédentes, dans lequel le taux du système plastifiant comprenant au moins un plastifiant liquide à 23°C et/ou au moins une résine plastifiante présentant une température de transition vitreuse supérieure à 20°C, dans la composition de la première couche, est compris dans un domaine allant de 35 à 100 pce, de préférence de 50 à 95 pce, de préférence encore de 55 à 90 pce.

23. Stratifié selon l'une quelconque des réalisations précédentes, dans lequel le système plastifiant comprend un plastifiant liquide à 23°C et une résine plastifiante présentant une température de transition vitreuse supérieure à 20°C.

24. Stratifié selon l'une quelconque des réalisations précédentes, dans lequel le plastifiant liquide à 23°C de la composition de la première couche est choisi dans le groupe constitué par les polymères diéniques liquides, les huiles polyoléfiniques, les huiles naphténiques, les huiles paraffiniques, les huiles DAE, les huiles MES, les huiles TDAE, les huiles RAE, les huiles TRAE, les huiles SRAE, les huiles minérales, les huiles végétales, les plastifiants éthers, les plastifiants esters, les plastifiants phosphates, les plastifiants sulfonates et leurs mélanges.

25. Stratifié selon l'une quelconque des réalisations précédentes, dans lequel le taux de plastifiant liquide à 23°C, dans la composition de la première couche, est compris dans un domaine allant de 1 à 49 pce, de préférence de 5 à 40 pce.

26. Stratifié selon l'une quelconque des réalisations précédentes, dans lequel la résine plastifiante présentant une température de transition vitreuse supérieure à 20°C de la composition de la première couche est choisie dans le groupe constitué par les résines d'homopolymère ou copolymère de cyclopentadiène, les résines d'homopolymère ou copolymère de dicyclopentadiène, les résines d'homopolymère ou copolymère de terpène, les résines d'homopolymère ou copolymère de coupe $C_5$, les résines d'homopolymère ou copolymère de coupe $C_9$, les résines d'homopolymère ou copolymère d'alpha-méthyl-styrène et leurs mélanges.

27. Stratifié selon l'une quelconque des réalisations précédentes, dans lequel le taux de résine plastifiante présentant une température de transition vitreuse supérieure à 20°C, dans la composition de la première couche, est compris dans un domaine allant de 1 à 99 pce, de préférence de 5 à 95 pce.

28. Stratifié selon l'une quelconque des réalisations précédentes, dans lequel la charge renforçante de la composition de la première couche comprend du noir de carbone, de la silice ou un de leurs mélanges.

29. Stratifié selon l'une quelconque des réalisations précédentes, dans lequel le taux de charge renforçante dans la composition de la première couche est compris dans un domaine allant de 30 à 200 pce, de préférence de 40 à 190 pce, de préférence de 50 à 180 pce.

30. Stratifié selon l'une quelconque des réalisations précédentes, dans lequel le système de réticulation de la première couche est un système de vulcanisation comprenant du soufre moléculaire et/ou au moins un agent donneur de soufre.

31. Stratifié selon l'une quelconque des réalisations précédentes, dans lequel l'élastomère diénique ayant un taux massique d'unité diénique supérieur à 50% de la composition de la deuxième couche est choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères.

32. Stratifié selon l'une quelconque des réalisations précédentes, dans lequel l'élastomère diénique ayant un taux massique d'unité diénique supérieur à 50% de la composition de la deuxième couche est un polyisoprène, de préférence comportant un taux massique de liaisons 1,4-cis d'au moins 90%, de préférence d'au moins 98%, de la masse du polyisoprène.

33. Stratifié selon la réalisation 32, dans lequel le polyisoprène de la composition de la deuxième couche est choisi dans le groupe constitué par le caoutchouc naturel, les polyisoprènes de synthèse ou leurs mélanges.

34. Stratifié selon l'une quelconque des réalisations précédentes, dans lequel l'élastomère diénique ayant un taux massique d'unité diénique supérieur à 50% de la première couche et l'élastomère diénique ayant un taux massique d'unité diénique supérieur à 50% de la deuxième couche sont des polyisoprènes.

35. Stratifié selon l'une quelconque des réalisations précédentes, dans lequel l'élastomère diénique ayant un taux massique d'unité diénique supérieur à 50% de la première couche et l'élastomère diénique ayant un taux massique d'unité diénique supérieur à 50% de la deuxième couche sont des polyisoprènes comportant un taux massique de liaisons 1,4-cis d'au moins 90%, de préférence d'au moins 98%, de la masse du polyisoprène.

36. Stratifié selon l'une quelconque des réalisations précédentes, dans lequel l'élastomère diénique ayant un taux massique d'unité diénique supérieur à 50% est présent dans la composition de la deuxième couche à un taux compris dans un domaine allant de 60 à 100 pce, de préférence de 80 à 100 pce, de préférence encore de 90 à 100 pce.

37. Stratifié selon l'une quelconque des réalisations précédentes, dans lequel la composition de la deuxième couche comprend une charge renforçante.

38. Stratifié selon la réalisation 37, dans lequel la charge renforçante de la composition de la deuxième couche est majoritairement, de préférence exclusivement, constituée de noir de carbone.

39. Stratifié selon la réalisation 37, dans lequel la charge renforçante de la composition de la deuxième couche est majoritairement constituée de silice.

40. Stratifié selon l'une quelconque des réalisations 37 à 39, dans lequel le taux de charge renforçante dans la composition de la deuxième couche est compris dans un domaine allant de 20 pce à 80 pce, de préférence de 25 à 70 pce, de préférence de 30 à 60 pce.

41. Stratifié selon l'une quelconque des réalisations précédentes, dans lequel le système de réticulation de la deuxième couche est un système de vulcanisation comprenant du soufre moléculaire et/ou au moins un agent donneur de soufre.

42. Stratifié selon l'une quelconque des réalisations précédentes, dans lequel la première couche a une épaisseur comprise dans un domaine allant de 0,5 à 120 mm, de préférence de 1 à 15 mm, ou de 0,2 mm à 120 mm, de préférence de 0,3 à 15 mm.

43. Stratifié selon l'une quelconque des réalisations 1 à 41, dans lequel la première couche a une épaisseur comprise dans un domaine allant de 0,2 à 10 mm, de préférence de 0,3 à 5 mm.

44. Stratifié selon l'une quelconque des réalisations précédentes, dans lequel la deuxième couche a une épaisseur comprise dans un domaine allant de 0,2 à 10 mm, de préférence de 0,3 à 7 mm.

45. Article en caoutchouc comprenant un stratifié défini à l'une quelconque des réalisations 1 à 43.

46. Article en caoutchouc selon la réalisation 45, ledit article étant choisi dans le groupe constitué par les bandages pneumatiques, les bandages non pneumatiques, les chenilles, les bandes de convoyages et les articles antivibratoires, de préférence dans le groupe constitué par les bandages pneumatiques, les bandages non pneumatiques et les bandes de convoyages.

47. Bandage pneumatique ou non-pneumatique comprenant un stratifié défini à l'une quelconque des réalisations 1 à 44, dans lequel la première couche du stratifié constitue une partie ou la totalité de la bande de roulement du pneumatique et la deuxième couche du stratifié constitue une partie ou la totalité d'une sous-couche à la bande de roulement.

48. Bandage pneumatique comprenant un stratifié défini à l'une quelconque des réalisations 1 à 44, dans lequel la première couche du stratifié constitue une partie ou la totalité d'au moins un flanc du pneumatique et la deuxième couche du stratifié constitue une partie ou la totalité d'une nappe carcasse.

## IV- EXEMPLES

### IV-1 Mesures et tests utilisés

#### *IV-1.1 Détermination de la microstructure des élastomères* :

a) Détermination de la microstructure des copolymères Ethylène-Butadiène (Elastomère E1) :

La microstructure des copolymères d'éthylène et de butadiène est déterminée par analyse RMN 1H, suppléée par l'analyse RMN 13C lorsque la résolution des spectres RMN du 1H ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone. Pour les élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz. Pour les mesures sur des élastomères solubles, est utilisée une sonde RMN liquide permettant d'observer le proton et le carbone en mode découplé du proton. La préparation des échantillons non solubles est faite dans des rotors remplis avec le matériau analysé et un solvant deutéré permettant le gonflement, en général du chloroforme deutéré (CDCl3). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisantes. Les échantillons solubles sont mis en solution dans un solvant deutéré (environ 25mg d'élastomère dans 1mL), en général du chloroforme deutéré (CDCl3). Le solvant ou coupage de solvant utilisé doit toujours être deutéré et sa nature chimique peut être adaptée par l'homme du métier. Dans les deux cas (échantillon soluble ou échantillon gonflé). Pour la RMN du proton est utilisée une séquence simple impulsion de 30°. La fenêtre spectrale est réglée pour observer l'ensemble des raies de résonances appartenant aux molécules analysées. Le nombre d'accumulations est réglé afin d'obtenir un rapport signal sur bruit suffisant pour la quantification de chaque motif. Le délai de recyclage entre chaque impulsion est adapté pour obtenir une mesure quantitative. Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulations est réglé afin d'obtenir un rapport signal sur bruit suffisant pour la quantification de chaque motif. Le délai de recyclage entre chaque impulsion est adapté pour obtenir une mesure quantitative. Les mesures de RMN sont réalisées à 25°C.

b) Détermination de la microstructure des copolymères Ethylène-Myrcène (Elastomère E2) :

La caractérisation spectrale et les mesures de la microstructure des copolymères Ethylène-Myrcène sont réalisées par spectroscopie de Résonance Magnétique Nucléaire (RMN). Spectromètre : Pour ces mesures, un spectromètre Bruker Avance III HD 400 MHz est utilisé, équipé d'une sonde Bruker cryo-BBFO z-grad 5 mm.

Expériences : Les expériences 1H sont enregistrées à l'aide d'une impulsion radiofréquence avec un angle de basculement de 30°, le nombre de répétitions est de 128 avec un délai de recyclage de 5 secondes. Les expériences RMN de corrélation 1H-13C HSQC (Heteronuclear Single Quantum Coherence) et HMBC (Heteronuclear Multiple-Bond Correlation) sont enregistrées avec un nombre de répétitions de 128 et un nombre d'incréments de 128. Les expériences sont réalisées à 25°C.

Préparation de l'échantillon : 25 mg d'échantillon sont solubilisés dans 1 mL de chloroforme deutéré ($CDCl_3$).

Calibration de l'échantillon : Les axes des déplacements chimiques $^1H$ et $^{13}C$ sont calibrés par rapport à l'impureté protonée du solvant ($CHCl_3$) à $\delta_{1H}$ = 7,2 ppm (pour le signal le plus déblindé) et $\delta_{13C}$ = 77 ppm (pour le signal le moins déblindé).

Attribution spectrale pour les copolymères d'éthylène et du 1,3-myrcène : Dans les représentations A, B, C ci-dessous, les symboles R1 et R2 représentent les points de rattachement de l'unité à la chaîne polymère. Les signaux des formes d'insertion du 1,3-diène A, B et C ont été observés sur les différents spectres enregistrés. D'après S. Georges et al., (Polymer 55 (2014) 3869-3878), le signal du groupement -CH= n°8" caractéristique de la forme C présente des déplacements chimiques $^1H$ et $^{13}C$ identiques au groupement - CH= n°3. Les déplacements chimiques des signaux caractéristiques des motifs A, B et C sont présentés dans le Tableau 1. Les motifs A, B et C correspondent respectivement aux unités de configuration 3,4, de configuration 1,2 et de configuration 1,4-trans. Les quantifications ont été effectuées à partir de l'intégration des spectres RMN 1D $^1H$ à l'aide du logiciel Topspin. Les signaux intégrés pour la quantification des différents motifs sont :

Ethylène : signal à 1,2 ppm correspondant à 4 protons
Myrcène total : signal n°1 (1,59 ppm) correspondant à 6 protons
Forme A : signal n°7 (4,67 ppm) correspondant à 2 protons
Forme B : signal n°8' (5,54 ppm) correspondant à 1 proton

La quantification de la microstructure est réalisée en pourcentage molaire (%molaire) comme suit : %molaire d'un motif = intégrale 1H d'un motif * 100 / Σ (intégrales 1H de chaque motif).

[Tableau 1]

| δ1H (ppm) | δ13C (ppm) | Groupement |
|---|---|---|
| 5.54 | 146.4 | 8' |
| 5.07 | 124.6 | 3 + 8" |
| 4.97 - 4.79 | 112.0 | 9' |
| 4.64 | 108.5 | 7 |
| 2.03 | 26.5 | 4 |
| 2.0 - 1.79 | 31.8 | 5 + 5' + 5'' |
| | 44.5 | 8 |
| 1.59 | 25.9 et 17.0 | 1 |
| 1.2 | 36.8 - 24.0 | $CH_2$ éthylène |

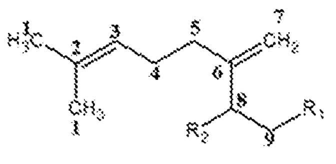
A

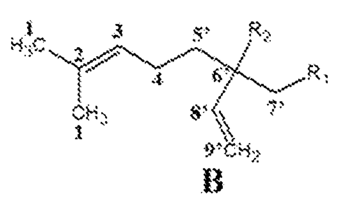
B

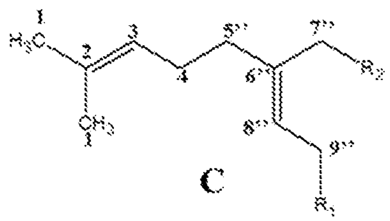
C

c) Détermination de la microstructure des terpolymères Ethylène-Butadiène-Myrcène (Elastomère E3) :

La caractérisation spectrale et les mesures de la microstructure de copolymère Ethylène-Butadiène-Myrcène

sont réalisées par spectroscopie de Résonance Magnétique Nucléaire (RMN).

Pour ces mesures, un spectromètre Bruker Avance III HD 400 MHz est utilisé, équipé d'une sonde Bruker cryo-BBFO z-grad 5 mm. Les expériences 1H sont enregistrées à l'aide d'une impulsion radiofréquence avec un angle de basculement de 30°, le nombre de répétitions est de 128 avec un délai de recyclage de 5 secondes. Les expériences RMN de corrélation 1H-13C HSQC (Heteronuclear Single Quantum Coherence) et HMBC (Heteronuclear Multiple-Bond Correlation) sont enregistrées avec un nombre de répétitions de 128 et un nombre d'incréments de 128. Les expériences sont réalisées à 25 °C. 25 mg d'échantillon sont solubilisés dans 1 mL d'orthodichlorobenzène deutéré (ODCB). Les axes des déplacements chimiques 1H et 13C sont calibrés par rapport à l'impureté protonée du solvant à $\delta$1H = 7,2 ppm (pour le signal le plus déblindé) et $\delta$13C = 127 ppm (pour le signal le moins déblindé).

Les unités monomères possibles dans le terpolymère sont $-CH_2-CH(CH=CH_2)-$,$-CH_2-CH=CH-CH_2-$, $-CH_2-CH_2-$, le motif 1,2-cyclohexanediyle et les structures suivantes, $R_1$ et $R_2$ représentant la chaîne polymère :

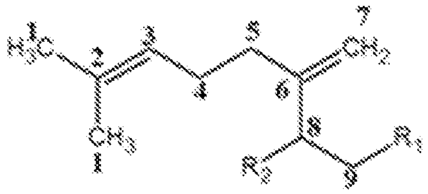

A

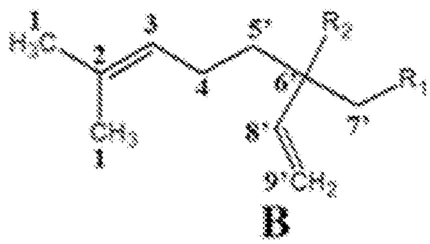

B

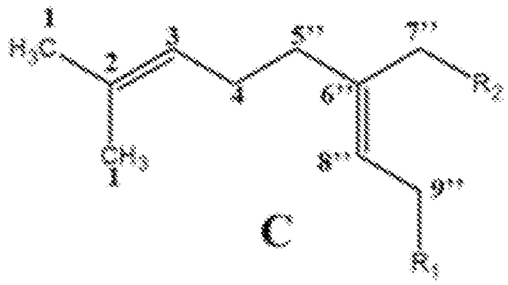

C

Le motif 1,2-cyclohexanediyle est de structure suivante :

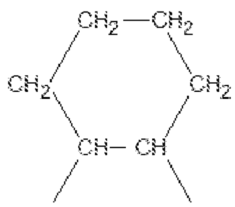

Les signaux des formes d'insertion du myrcène A ont été observés sur les différents spectres enregistrés. D'après S. Georges *et al.* (S.Georges, M.Bria, P. Zinck and M. Visseaux. Polymer 55 (2014) 3869-3878), le signal du groupement -CH= n°8" caractéristique de la forme C présente des déplacements chimiques $^1H$ et $^{13}C$ identiques au groupement -CH= n°3.

Les déplacements chimiques des signaux caractéristiques du polymère sont présentés dans le Tableau 2 (Attribution des signaux $^1H$ et $^{13}C$ des terpolymères Ethylène-Butadiène-Myrcène autres que ceux des unités du 1,3-butadiène).

[Tableau 2]

| $\delta$1H (ppm) | $\delta$13C (ppm) | Groupement |
|---|---|---|
| 5.19 | 125.1 | 3 + 8" |
| 4.86 | 109.0 | 7 |
| 1.59 et 1.68 | 247 et 17.6 | 1 |
| 1.3 | 37.5 - 24.0 | CH2 éthylène |

Les quantifications ont été effectuées à partir de l'intégration des spectres RMN 1D $^{1}H$ à l'aide du logiciel Topspin.

Les signaux intégrés pour la quantification des différents motifs sont :

Ethylène : Totalité des signaux entre 0.5 ppm et 3.0 ppm en soustrayant les contributions aliphatiques des autres motifs du terpolymère. Le calcul correspond à 4 protons du motif Ethylène.
Forme A : signal n°7 (4.86 ppm) correspondant à 2 protons.
La proportion de forme C n'est pas accessible directement mais peut être calculée à partir du signal n°3+8" en soustrayant la contribution de la forme A.
PB1-4 : Signal entre 5.71 ppm et 5.32 ppm correspond à 2 protons (en retirant la contribution PB1-2).
PB1-2 : signal entre 5.11 ppm et 4.92 ppm correspond à 2 protons.
Cycles cyclohexane : signal entre 1.80 ppm et 1.70 ppm correspond à 2 protons.

La quantification de la microstructure est réalisée en pourcentage molaire (% molaire) comme suit :

$$\% \text{ molaire d'un motif} = \text{intégrale } ^{1}H \text{ d'un motif} * 100 / \Sigma (\text{intégrale } ^{1}H \text{ de chaque motif}).$$

d) Détermination de la microstructure des terpolymères éthylène-butadiène-farnésène (Elastomères E4 et E5) :

La caractérisation spectrale et les mesures de la microstructure de copolymère Ethylène-butadiène-farnésène sont réalisées par spectroscopie de Résonance Magnétique Nucléaire (RMN). Pour ces mesures, un spectromètre Bruker Avance III HD 400 MHz est utilisé, équipé d'une sonde Bruker cryo-BBFO z-grad 5 mm. Les expériences 1H sont enregistrées à l'aide d'une impulsion radiofréquence avec un angle de basculement de 30°, le nombre de répétitions est de 128 avec un délai de recyclage de 5 secondes. Les expériences RMN de corrélation 1H-13C HSQC (Heteronuclear Single Quantum Coherence) et HMBC (Heteronuclear Multiple-Bond Correlation) sont enregistrées avec un nombre de répétition de 128 et un nombre d'incréments de 128. Les expériences sont réalisées à 25 °C. 25 mg d'échantillon sont solubilisés dans 1 mL d'orthodichlorobenzène deutéré (ODCB). Les axes des déplacements chimiques $^{1}H$ et $^{13}C$ sont calibrés par rapport à l'impureté protonée du solvant à $\delta_{1H}$ = 7,2 ppm (pour le signal le plus déblindé) et $\delta_{13C}$ = 127 ppm (pour le signal le moins déblindé).

Les unités monomères possibles dans le terpolymère sont $-CH_2-CH(CH=CH_2)-$,$-CH_2-CH=CH-CH_2-$, $-CH_2-CH_2-$, le motif 1,2-cyclohexanediyle et les structures suivantes, et $R_2$ représentant la chaîne polymère :

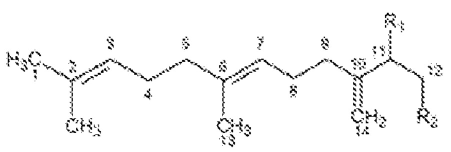
A

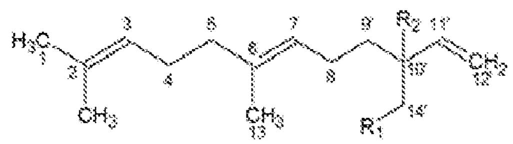
B

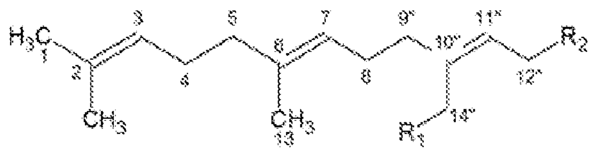
C

Les signaux de la forme d'insertion du farnésène A ont été observés sur les différents spectres enregistrés. Le signal du groupement -CH= n°11" caractéristique de la forme C présente des déplacements chimiques $^{1}H$ et $^{13}C$ identiques aux groupements -CH= n°3 et n°7.

Les déplacements chimiques des signaux caractéristiques du polymère sont présentés dans le Tableau 3 (Attribution des signaux $^{1}H$ et $^{13}C$ des terpolymères Ethylène-Butadiène-Farnésène autres que ceux des unités du 1,3-butadiène).

[Tableau 3]

| δ1H (ppm) | δ13C (ppm) | Groupement |
|---|---|---|
| 5.25 | 125.0 | 7 |
| 5.15 | 125.0 | 3, 11" |

(suite)

| δ1H (ppm) | δ13C (ppm) | Groupement |
|---|---|---|
| 4.87 | 109.0 | 14 |
| 1.59 et 1.67 | 24.6 et 17.5 | 1, 13 |
| 1.28 | 38 - 24.0 | CH2 éthylène |

Les quantifications ont été effectuées à partir de l'intégration des spectres RMN 1D $^1$H à l'aide du logiciel Topspin.

Les signaux intégrés pour la quantification des différents motifs sont :

Motif farnésène forme A à partir du signal **n°14 $CH_2$=** pour 2 protons,
Motif farnésène forme C à partir des signaux **n°3,11" et n°7 CH=** (en soustrayant la contribution de la forme A), pour 2 protons,
Motif farnésène forme B : à partir du signal **n°11'**, propre à cette forme, pour 1 proton. PB1-4 : Signal entre 5.71 ppm et 5.32 ppm correspond à 2 protons (en retirant la contribution PB1-2).
PB1-2 : signal entre 5.11 ppm et 4.92 ppm correspond à 2 protons.
Cycles cyclohexane : signal entre 1.80 ppm et 1.70 ppm correspond à 2 protons.
motif Ethylène en intégrant la totalité des signaux aliphatiques (de ~ 0.5 à 3 ppm) et en soustrayant la contribution de tous les autres motifs aliphatiques (PB1-4, PB1-2, cycle EBR, farnésène forme A et C).

La quantification de la microstructure est réalisée en pourcentage molaire (% molaire) comme suit :

$$\text{\% molaire d'un motif} = \text{intégrale } ^1\text{H d'un motif} * 100 / \Sigma \text{ (intégrales } ^1\text{H de chaque motif)}$$

*IV-1.2 Détermination de la température de transition vitreuse des polymères :*

La température de transition vitreuse est mesurée au moyen d'un calorimètre différentiel ("Differential Scanning Calorimeter") selon la norme ASTM D3418 (1999).

*IV-1.3 Détermination de la macrostructure des polymères par chromatographie d'exclusion stérique (SEC) :*

a) Principe de la mesure :

La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Associée à 3 détecteurs (3D), un réfractomètre, un viscosimètre et un détecteur de diffusion de la lumière à 90°, la SEC permet d'appréhender la distribution de masses molaires absolues d'un polymère. Les différentes masses molaires absolues moyennes en nombre (Mn), en poids (Mw) et la dispersité (D = Mw/Mn) peuvent également être calculées.

b) Préparation du polymère :

Chaque échantillon est solubilisé dans du tétrahydrofurane à une concentration d'environ 1 g/L. Puis la solution est filtrée sur filtre de porosité 0.45μm avant injection.

c) Analyse SEC 3D :

Pour déterminer la masse molaire moyenne en nombre (Mn), et le cas échant la masse molaire moyenne en poids (Mw) et l'indice de polydispersité (Ip) des polymères, on utilise la méthode ci-dessous.

La masse molaire moyenne en nombre (Mn), la masse molaire moyenne en poids (Mw) et l'indice de polydispersité du polymère (ci-après échantillon) sont déterminés de manière absolue, par chromatographie d'exclusion stérique (SEC : Size Exclusion Chromatography) triple détection. La chromatographie d'exclusion stérique triple détection présente l'avantage de mesurer des masses molaires moyennes directement sans calibration.

La valeur de l'incrément d'indice de réfraction dn/dc de la solution de l'échantillon est mesurée en ligne en utilisant l'aire du pic détecté par le réfractomètre (RI) de l'équipement de chromatographie liquide. Pour appliquer cette méthode, il faut vérifier que 100% de la masse d'échantillon est injectée et éluée au travers de la colonne. L'aire du pic RI

dépend de la concentration de l'échantillon, de la constante du détecteur RI et de la valeur du dn/dc.

Pour déterminer les masses molaires moyennes, on utilise la solution à 1g/l précédemment préparée et filtrée que l'on injecte dans le système chromatographique. L'appareillage utilisé est une chaîne chromatographique « WATERS alliance ». Le solvant d'élution est le tétrahydrofurane contenant 250 ppm de BHT (2,6-diter-butyle 4-hydroxy toluène), le débit est de 1 mL.min$^{-1}$, la température du système de 35° C et la durée d'analyse de 60 min. Les colonnes utilisées sont un jeu de trois colonnes AGILENT de dénomination commerciale « PL GEL MIXED B LS». Le volume injecté de la solution de l'échantillon est 100 μL. Le système de détection est composé d'un viscosimètre différentiel Wyatt de dénomination commerciale « VISCOSTAR II », d'un réfractomètre différentiel Wyatt de dénomination commerciale « OPTILAB T-REX » de longueur d'onde 658 nm, d'un détecteur à diffusion de lumière statique multi angle Wyatt de longueur d'onde 658 nm et de dénomination commerciale « DAWN HELEOS 8+ ».

Pour le calcul des masses molaires moyennes en nombre et de l'indice de polydispersité, est intégrée la valeur de l'incrément d'indice de réfraction dn/dc de la solution de l'échantillon obtenue ci-dessus. Le logiciel d'exploitation des données chromatographiques est le système « ASTRA de Wyatt ».

IV-2 Synthèse des polymères :

Dans la synthèse de polymères, tous les réactifs sont obtenus commercialement exceptés les métallocènes. Le butyloctylmagnésium BOMAG (20% dans l'heptane, C = 0,88 mol.L$^{-1}$) provient de Chemtura et est stocké dans un tube de Schlenk sous atmosphère inerte. L'éthylène, de qualité N35, provient de la société Air Liquide et est utilisé sans purification préalable. Le myrcène (pureté ≥ 95%) et le farnésène (pureté ≥ 95%) sont obtenus chez Sigma-Aldrich.

Les polymères suivants sont synthétisés selon le mode opératoire décrit ci-après :

- copolymère d'éthylène et de 1,3-butadiène : élastomère E1 (non conforme à l'invention)
- copolymère d'éthylène et de myrcène : élastomère E2 (conforme à l'invention)
- copolymère d'éthylène, de butadiène et de farnésène : élastomère E3 (conforme à l'invention)
- copolymères d'éthylène, de butadiène et de myrcène : élastomères E4 et E5 (conforme à l'invention)

Dans un réacteur contenant à 80°C du méthylcyclohexane, ainsi que de l'éthylène (Et) et du butadiène (Bd) et/ou du myrcène (Myr) et/ou du farnésène (Far) dans les proportions indiquées dans le Tableau 4, on ajoute du butyloctylmagnésium (BOMAG) pour neutraliser les impuretés du réacteur, puis le système catalytique (voir Tableau 4). A ce moment, la température de réaction est régulée à 80°C et la réaction de polymérisation démarre. La réaction de polymérisation se déroule à une pression constante de 8 bars. Le réacteur est alimenté tout au long de la polymérisation en éthylène et en butadiène (Bd) et/ou myrcène (Myr) et/ou farnésène (Far) dans les proportions définies dans le Tableau 4. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante. Le système catalytique est un système catalytique préformé. Il est préparé dans le méthylcyclohexane à partir d'un métallocène, le $[Me_2SiFlu_2Nd(\mu\text{-}BH_4)_2Li(THF)]$, d'un co-catalyseur, le butyloctylmagnésium (BOMAG), et d'un monomère de préformation, le 1,3-butadiène, dans les teneurs indiquées dans le Tableau 4. Il est préparé selon une méthode de préparation conforme au paragraphe II.1 de la demande de brevet WO 2017/093654 A1.

La microstructure des élastomères E1 à E5 et leurs propriétés figurent dans les Tableaux 5 et 6. Pour la microstructure, la Tableau 5 indique les taux molaires des unités éthylène (Eth), des unités du 1,3-butadiène, des motifs 1,2-cyclohexanediyle (cycle), des unités du β-farnésène ou du myrcène. Y figure également la proportion molaire des unités du β-farnésène ou du myrcène selon qu'elles sont de configuration 1,4, de configuration 1,2 et 3,4.

[Tableau 4]

| Synthèse | E1 | E2 | E3 | E4 | E5 |
|---|---|---|---|---|---|
| Concentration métallocène (mmol/L) | 0,07 | 0,09 | 0,09 | 0,09 | 0,09 |
| Concentration agent alkylant (mmol/L) | 0,36 | 0,17 | 0,25 | 0,2 | 0,33 |
| Ratio molaire monomère préformation/ métal Nd | 90 | 90 | 90 | 90 | 90 |
| Composition de l'alimentation (%mol Et/Bd) | 80/20 | - | - | - | - |
| Composition de l'alimentation (%mol Et/Myr) | - | 60/40 | - | - | - |
| Composition de l'alimentation (%mol Eth/Btd/Far) | - | - | 81/9/10 | - | - |
| Composition de l'alimentation (%mol Eth/Btd/Myr) | - | - | - | 79/14/7 | 70/20/10 |

[Tableau 5]

| Elastomère | E1 | E2 | E3 | E4 | E5 |
|---|---|---|---|---|---|
| Et (%mol) | 77 | 74 | 76 | 75 | 68 |
| Bd (%mol) | 15 | - | 8 | 13 | 19 |
| 1,2-cyclohexanediyle (%mol) | 8 | - | 5 | 6 | 7 |
| Far ou Myr (%mol) | - | 26 | 11 | 6 | 6 |
| Far ou Myr 1,4 (%mol/ %mol Far ou Myr) | - | 31 | 36 | 33 | 33 |
| Far ou Myr 1,2 (%mol/ %mol Far ou Myr) | - | 4 | <1 | <1 | <1 |
| Far ou Myr 3,4 (%mol/ %mol Far ou Myr) | - | 65 | 64 | 67 | 67 |

[Tableau 6]

| Elastomère | E1 | E2 | E3 | E4 | E5 |
|---|---|---|---|---|---|
| Tg (°C) | -40 | -60 | -61 | -49 | -49 |
| Mn (g/mol) | 128 888 | 367 400 | 200 800 | 298 000 | 179 500 |

IV-3 Préparation des compositions de caoutchouc :

Dans les exemples qui suivent, les compositions caoutchouteuses ont été réalisées comme décrit au point II-4 ci-dessus. En particulier, la phase « non-productive » a été réalisée dans un mélangeur de 3 litres pendant 5 minutes, pour une vitesse moyenne de palettes de 50 tours par minute jusqu'à atteindre une température maximale de tombée de 160°C. La phase « productive » a été réalisée dans un outil à cylindre à 23°C pendant 10 minutes.

IV-4 Essais de caoutchouterie :

L'adhésion de plusieurs compositions de caoutchouc comprenant un copolymère contenant des unités d'éthylène et de 1,3-diène sur une composition à base de caoutchouc naturel a été comparée en fonction de la nature du copolymère et du taux de plastifiant dans la composition.

La couche à base de caoutchouc naturel sur laquelle l'adhésion des compositions T1 à T6 (non conformes à l'invention) et des compositions C1 à C4 (conformes à l'invention) a été testée correspond à une composition classiquement utilisée en couche interne de pneumatique, telle qu'une nappe carcasse ou une sous-couche de bande de roulement. La composition (T0) de cette couche à base de caoutchouc naturel est présentée dans le Tableau 7 ci-dessous.

L'adhésion des compositions T1 à T6 et C1 à C4 sur la composition T0 a été comparée. Les compositions témoins T1 et T6 sont non-conformes à l'invention car l'élastomère E1 comprenant plus de 50% en mole d'unité éthylène ne comprend pas d'unité 1,3-diène de formule (I). Les compositions témoin T1 à T5 sont non conformes à l'invention car elles ne comprennent pas de système plastifiant conforme à l'invention. Les compositions T6, C1, C2, C3 et C4 diffèrent respectivement des compositions T1, T2, T3, T4 et T5 uniquement par la présence d'un système plastifiant conforme à l'invention. Il peut être noté que le taux de silice a été ajusté afin de maintenir la fraction volumique de charge constante, la fraction volumique de charge dans une composition de caoutchouc étant définie comme étant le rapport du volume de la charge sur le volume de l'ensemble des constituants de la composition, étant entendu que le volume de l'ensemble des constituants est calculé en additionnant le volume de chacun des constituants de la composition.

Les mesures d'adhésion ont été réalisées par un test dit de pelage en T ou aussi appelé pelage à 180°. Les éprouvettes de pelage ont été réalisées par mise en contact des deux couches (les compositions constitutives des couches étant à l'état cru) dont l'adhésion doit être testée. Une amorce de rupture a été insérée entre les deux couches. Chacune des couches a été renforcée par une nappe composite qui limite la déformation desdites couches sous traction. L'éprouvette une fois assemblée a été portée à 150°C sous une pression de 16 bars pendant 30 minutes. Des bandes de 30 mm de largeur ont ensuite été découpées au massicot. Les deux côtés de l'amorce de rupture ont été ensuite placés dans les mors d'une machine de traction de marque « Instron ». Les essais ont été réalisés à 20°C et à une vitesse de traction de 100 mm/min. On a enregistré les efforts de traction et on norme ceux-ci par la largeur de l'éprouvette. On a obtenu une courbe de force par unité de largeur (en N/mm) en fonction du déplacement de traverse mobile de la machine de traction (entre 0 et 200 mm). La valeur d'adhésion retenue correspond à la propagation de la rupture au sein de l'éprouvette et donc à la valeur stabilisée moyenne de la courbe. Les valeurs d'adhésion des exemples ont également été normées (base 100) par rapport au témoin T1 pour les compositions T2 à T5 ou par rapport au témoin T6 pour les

compositions C1 à C4. Un indice supérieur à 100 indique une plus forte amélioration de l'adhésion.

Le Tableau 7 présente les compositions testées (en pce), ainsi que les résultats obtenus.

[Tableau 7]

| Compositions | T0 | T1 | T2 | T3 | T4 | T5 | T6 | C1 | C2 | C3 | C4 |
|---|---|---|---|---|---|---|---|---|---|---|---|
| Caoutchouc naturel | 100 | - | - | - | - | - | - | - | - | - | - |
| Elastomère E1(1) | - | 100 | - | - | - | - | 100 | - | - | - | - |
| Elastomère E2(1) | - | - | 100 | - | - | - | - | 100 | - | - | - |
| Elastomère E3(1) | - | - | - | 100 | - | - | - | - | 100 | - | - |
| Elastomère E4(1) | - | - | - | - | 100 | - | - | - | - | 100 | - |
| Elastomère E5(1) | - | - | - | - | - | 100 | - | - | - | - | 100 |
| N330(2) | 35 | - | - | - | - | - | - | - | - | - | - |
| Silice(3) | 10 | 48 | 48 | 48 | 48 | 48 | 80.5 | 80.5 | 80.5 | 80.5 | 80.5 |
| Fraction vol. de charge | N.C. | 16% | 16% | 16% | 16% | 16% | 16% | 16% | 16% | 16% | 16% |
| Agent de couplage(4) | 1 | 3.8 | 3.8 | 3.8 | 3.8 | 3.8 | 3.8 | 3.8 | 3.8 | 3.8 | 3.8 |
| Résine(5) | 1 | - | - | - | - | - | - | - | - | - | - |
| Résine(6) | 0.5 | - | - | - | - | - | - | - | - | - | - |
| Résine(7) | - | - | - | - | - | - | 38 | 38 | 38 | 38 | 38 |
| Huile(8) | - | - | - | - | - | - | 38 | 38 | 38 | 38 | 38 |
| DPG(9) | - | 1 | 1 | 1 | 1 | 1 | 1 | 1 | 1 | 1 | 1 |
| Cire ozone(10) | - | 1 | 1 | 1 | 1 | 1 | 1 | 1 | 1 | 1 | 1 |
| Antioxydant(11) | 1 | 2 | 2 | 2 | 2 | 2 | 2 | 2 | 2 | 2 | 2 |
| Acide stéarique | 1.5 | 1.5 | 1.5 | 1.5 | 1.5 | 1.5 | 1.5 | 1.5 | 1.5 | 1.5 | 1.5 |
| ZnO(12) | 4.5 | 2.5 | 2.5 | 2.5 | 2.5 | 2.5 | 2.5 | 2.5 | 2.5 | 2.5 | 2.5 |
| Accélérateur(13) | 1.5 | 1.3 | 1.3 | 1.3 | 1.3 | 1.3 | 1.3 | 1.3 | 1.3 | 1.3 | 1.3 |
| Soufre | 1.7 | 0.6 | 0.6 | 0.6 | 0.6 | 0.6 | 0.6 | 0.6 | 0.6 | 0.6 | 0.6 |
| | | | | | | | | | | | |
| Adhésion (N/mm) | - | 10 | 8 | 4 | 5 | 3 | 14 | 16 | 25 | 25 | 25 |
| Adhésion (base 100 / E1) | - | 100 | 80 | 40 | 50 | 30 | 100 | 115 | 180 | 180 | 180 |

(1) Elastomères E1 à E5 préparés selon le procédé décrit au point IV-2 ci-dessus
(2) Noir de carbone N330 selon la norme ASTM D-1765-2017
(3) Silice « Zeosil 1165MP » commercialisée par Solvay
(4) Silane liquide triethoxysilylpropyltetrasulfure (TESPT) « Si69 » de la société Evonik
(5) Gum Rosin (colophane GEM SPE1) de la société Diamanto Malho
(6) Résine tackifiante « Escorez 1102 » de société EXXON (Mn 1370 g/mol ; Ip= 2,3)
(7) Résine d'hydrocarbure de pétrole « Escorez 5000 series » de la société Exxon Mobil (Tg = 52°C)
(8) Huile MES « Catenex SNR » commercialisée par la société Shell
(9) Diphénylguanidine « Perkacit DPG » de la société Flexsys
(10) Cire anti-ozone « VARAZON 4959 » de la société Sasol Wax
(11) N-1,3-diméthylbutyl-N-phényl-para-phenyldiamine « Santoflex 6-PPD » de la société Flexsys
(12) Oxyde de Zinc de grade industriel de la société Umicore
(13) N-cyclohexyl-2-benzothiazol-sulfénamide « Santocure CBS » de la société Flexsys

Ces résultats montrent que l'utilisation d'une composition de caoutchouc conforme à l'invention comprenant la combinaison d'un copolymère contenant des unités éthylène et des unités d'un 1,3-diène de formule (I) et d'un système plastifiant conforme à l'invention permet d'améliorer l'adhésion sur une composition diénique, par rapport à une composition de caoutchouc comprenant un copolymère contenant des unités éthylène et 1,3-diène différent des unités

1,3-diène de formule (I) et/ou par rapport à une composition ne comprenant pas le système plastifiant conforme à l'invention. L'amélioration de l'adhésion est bien plus importante pour les copolymères qui sont des copolymères d'éthylène, d'un 1,3-diène de formule (I) et d'un deuxième 1,3-diène choisi parmi le 1,3-butadiène, l'isoprène ou leur mélange conformes à l'invention.

## Revendications

**1.** Stratifié élastomère comprenant au moins deux couches adjacentes :

- la première couche étant constituée d'une composition de caoutchouc à base de :

  o 20 à 100 pce d'au moins un copolymère comprenant des unités éthylène et des unités d'un 1,3-diène de formule (I), les unités éthylène dans le copolymère représentant plus de 50% en mole des unités monomères du copolymère,

  $$CH_2=CR-CH=CH_2 \qquad (I)$$

  le symbole R représentant une chaîne hydrocarbonée ayant 3 à 20 atomes de carbone ;
  o 0 à 80 pce d'au moins un élastomère diénique ayant un taux massique d'unité diénique supérieur à 50% ;
  o 10 à 100 pce d'un système plastifiant comprenant au moins une résine plastifiante présentant une température de transition vitreuse supérieure à 20°C et/ou au moins un plastifiant liquide à 23°C;
  ◦ une charge renforçante ; et
  ◦ un système de réticulation,

- la deuxième couche étant constituée d'une composition de caoutchouc à base d'un élastomère diénique ayant un taux massique d'unité diénique supérieur à 50% et d'un système de réticulation.

**2.** Stratifié selon la revendication 1, dans lequel le 1,3-diène de formule (I) du copolymère de la première couche est le myrcène, le β-farnésène ou un mélange de myrcène et de β-famésène.

**3.** Stratifié selon l'une quelconque des revendications précédentes, dans lequel le copolymère comprenant en outre un deuxième 1,3-diène choisi parmi le 1,3-butadiène, l'isoprène ou leur mélange, de préférence le deuxième 1,3-diène du copolymère est le 1,3-butadiène.

**4.** Stratifié selon l'une quelconque des revendications 1 à 3, dans lequel le taux du copolymère d'éthylène et d'un 1,3-diène de formule (I) dans la composition de la première couche est compris dans un domaine allant de 20 à 90 pce, de préférence de 25 à 80 pce, de préférence encore de 30 à 80 pce, et dans lequel l'élastomère diénique ayant un taux massique d'unité diénique supérieur à 50% est présent dans la composition de la première couche à un taux compris dans un domaine allant de 10 à 80 pce, de préférence de 20 à 75 pce, de préférence encore de 20 à 70 pce.

**5.** Stratifié selon l'une quelconque des revendications précédentes, dans lequel l'élastomère diénique ayant un taux massique d'unité diénique supérieur à 50% de la composition de la première couche est choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères.

**6.** Stratifié selon l'une quelconque des revendications précédentes, dans lequel le système plastifiant comprend un plastifiant liquide à 23°C et une résine plastifiante présentant une température de transition vitreuse supérieure à 20°C.

**7.** Stratifié selon l'une quelconque des revendications précédentes, dans lequel le plastifiant liquide à 23°C de la composition de la première couche est choisi dans le groupe constitué par les polymères diéniques liquides, les huiles polyoléfiniques, les huiles naphténiques, les huiles paraffiniques, les huiles DAE, les huiles MES, les huiles TDAE, les huiles RAE, les huiles TRAE, les huiles SRAE, les huiles minérales, les huiles végétales, les plastifiants éthers, les plastifiants esters, les plastifiants phosphates, les plastifiants sulfonates et leurs mélanges.

**8.** Stratifié selon l'une quelconque des revendications précédentes, dans lequel le taux de plastifiant liquide à 23°C, dans la composition de la première couche, est compris dans un domaine allant de 1 à 49 pce, de préférence de 5 à 40

pce.

**9.** Stratifié selon l'une quelconque des revendications précédentes, dans lequel la résine plastifiante présentant une température de transition vitreuse supérieure à 20°C de la composition de la première couche est choisie dans le groupe constitué par les résines d'homopolymère ou copolymère de cyclopentadiène, les résines d'homopolymère ou copolymère de dicyclopentadiène, les résines d'homopolymère ou copolymère de terpène, les résines d'homopolymère ou copolymère de coupe $C_5$, les résines d'homopolymère ou copolymère de coupe $C_9$, les résines d'homopolymère ou copolymère d'alpha-méthyl-styrène et leurs mélanges.

**10.** Stratifié selon l'une quelconque des revendications précédentes, dans lequel le taux de résine plastifiante présentant une température de transition vitreuse supérieure à 20°C, dans la composition de la première couche, est compris dans un domaine allant de 1 à 99 pce, de préférence de 5 à 95 pce.

**11.** Stratifié selon l'une quelconque des revendications précédentes, dans lequel le taux de charge renforçante dans la composition de la première couche est compris dans un domaine allant de 30 à 200 pce, de préférence de 40 à 190 pce, de préférence de 50 à 180 pce.

**12.** Stratifié selon l'une quelconque des revendications précédentes, dans lequel l'élastomère diénique ayant un taux massique d'unité diénique supérieur à 50% de la composition de la deuxième couche est choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères.

**13.** Stratifié selon l'une quelconque des revendications précédentes, dans lequel l'élastomère diénique ayant un taux massique d'unité diénique supérieur à 50% de la première couche et l'élastomère diénique ayant un taux massique d'unité diénique supérieur à 50% de la deuxième couche sont des polyisoprènes comportant un taux massique de liaisons 1,4-cis d'au moins 90%, de préférence d'au moins 98%, de la masse du polyisoprène.

**14.** Stratifié selon l'une quelconque des revendications précédentes, dans lequel la première couche a une épaisseur comprise dans un domaine allant de 0,2 à 120 mm, de préférence de 0,3 à 15 mm, et dans lequel la deuxième couche a une épaisseur comprise dans un domaine allant de 0,2 à 10 mm, de préférence de 0,3 à 7 mm.

**15.** Article en caoutchouc comprenant un stratifié défini à l'une quelconque des revendications 1 à 14, ledit article étant de préférence choisi dans le groupe constitué par les bandages pneumatiques, les bandages non pneumatiques, les chenilles, les bandes de convoyages et les articles antivibratoires, de préférence encore dans le groupe constitué par les bandages pneumatiques, les bandages non pneumatiques et les bandes de convoyages.

## Patentansprüche

**1.** Elastomerlaminat mit mindestens zwei benachbarten Schichten:

- wobei die erste Schicht aus einer Kautschukzusammensetzung auf Basis von Folgendem besteht:

  ◦ 20 bis 100 phe mindestens eines Copolymers, das Ethylen-Einheiten und Einheiten eines 1,3-Diens der Formel (I) umfasst, wobei die Ethylen-Einheiten in dem Copolymer mehr als 50 Mol-% der Monomereinheiten des Copolymers ausmachen,

  $$CH_2=CR\text{-}CH=CH_2 \qquad (I)$$

  wobei das Symbol R für eine Kohlenwasserstoffkette mit 3 bis 20 Kohlenstoffatomen steht;
  ◦ 0 bis 80 phe mindestens eines Dienelastomers mit einem Massenanteil an Dien-Einheiten von mehr als 50 %;
  ◦ 10 bis 100 phe eines Weichmachersystems, das mindestens ein Weichmacherharz mit einer Glasübergangstemperatur von mehr als 20 °C und/oder mindestens einen bei 23 °C flüssigen Weichmacher umfasst;
  ◦ einem verstärkenden Füllstoff; und
  o einem Vernetzungssystem,

- wobei die zweite Schicht aus einer Kautschukzusammensetzung auf Basis eines Dienelastomers mit einem

Massenanteil an Dien-Einheiten von mehr als 50 % und einem Vernetzungssystem besteht.

2. Laminat nach Anspruch 1, wobei es sich bei dem 1,3-Dien der Formel (I) des Copolymers der ersten Schicht um Myrcen, β-Farnesen oder eine Mischung von Myrcen und β-Farnesen handelt.

3. Laminat nach einem der vorhergehenden Ansprüche, wobei das Copolymer ferner ein zweites 1,3-Dien umfasst, das aus 1,3-Butadien, Isopren oder einer Mischung davon ausgewählt ist, wobei es sich bei dem zweiten 1,3-Dien des Copolymers vorzugsweise um 1,3-Butadien handelt.

4. Laminat nach einem der Ansprüche 1 bis 3, wobei der Anteil des Copolymers von Ethylen und einem 1,3-Dien der Formel (I) in der Zusammensetzung der ersten Schicht in einem Bereich von 20 bis 90 phe, vorzugsweise von 25 bis 80 phe, weiter bevorzugt von 30 bis 80 phe, liegt und wobei das Dienelastomer mit einem Massenanteil an Dien-Einheiten von mehr als 50 % in der Zusammensetzung der ersten Schicht in einem Anteil in einem Bereich von 10 bis 80 phe, vorzugsweise von 20 bis 75 phe, weiter bevorzugt von 20 bis 70 phe, vorliegt.

5. Laminat nach einem der vorhergehenden Ansprüche, wobei das Dien-Elastomer mit einem Massenanteil an Dien-Einheiten von mehr als 50 % der Zusammensetzung der ersten Schicht aus der Gruppe bestehend aus Polybutadienen (BR), Naturkautschuk (NR), synthetischen Polyisoprenen (IR), Butadien-Copolymeren, Isopren-Copolymeren und Mischungen dieser Elastomere ausgewählt ist.

6. Laminat nach einem der vorhergehenden Ansprüche, wobei das Weichmachersystem einen bei 23 °C flüssigen Weichmacher und ein Weichmacherharz mit einer Glasübergangstemperatur von mehr als 20 °C umfasst.

7. Laminat nach einem der vorhergehenden Ansprüche, wobei der bei 23 °C flüssige Weichmacher der Zusammensetzung der ersten Schicht aus der Gruppe bestehend aus flüssigen Dienpolymeren, Polyolefinölen, naphthenischen Ölen, Paraffinölen, DAE-Ölen, MES-Ölen, TDAE-Ölen, RAE-Ölen, TRAE-Ölen, SRAE-Ölen, Mineralölen, Pflanzenölen, Ether-Weichmachern, Ester-Weichmachern, Phosphat-Weichmachern, Sulfonat-Weichmachern und Mischungen davon ausgewählt ist.

8. Laminat nach einem der vorhergehenden Ansprüche, wobei der Anteil an bei 23 °C flüssigem Weichmacher in der Zusammensetzung der ersten Schicht in einem Bereich von 1 bis 49 phe, vorzugsweise von 5 bis 40 phe, liegt.

9. Laminat nach einem der vorhergehenden Ansprüche, wobei das Weichmacherharz mit einer Glasübergangstemperatur von mehr als 20 °C der Zusammensetzung der ersten Schicht aus der Gruppe bestehend aus Cyclopentadien-Homopolymer- oder -Copolymerharzen, Dicyclopentadien-Homopolymer- oder - Copolymerharzen, Terpen-Homopolymer- oder -Copolymerharzen, $C_5$-Schnitt-Homopolymer- oder -Copolymerharzen, $C_9$-Schnitt-Homopolymer- oder - Copolymerharzen, alpha-Methylstyrol-Homopolymer- oder -Copolymerharzen und Mischungen davon ausgewählt ist.

10. Laminat nach einem der vorhergehenden Ansprüche, wobei der Anteil an Weichmacherharz mit einer Glasübergangstemperatur von mehr als 20 °C in der Zusammensetzung der ersten Schicht im Bereich von 1 bis 99 phe, vorzugsweise von 5 bis 95 phe, liegt.

11. Laminat nach einem der vorhergehenden Ansprüche, wobei der Anteil an verstärkendem Füllstoff in der Zusammensetzung der ersten Schicht in einem Bereich von 30 bis 200 phe, vorzugsweise von 40 bis 190 phe, vorzugsweise von 50 bis 180 phe, liegt.

12. Laminat nach einem der vorhergehenden Ansprüche, wobei das Dien-Elastomer mit einem Massenanteil an Dien-Einheiten von mehr als 50 % der Zusammensetzung der zweiten Schicht aus der Gruppe bestehend aus Polybutadienen (BR), Naturkautschuk (NR), synthetischen Polyisoprenen (IR), Butadien-Copolymeren, Isopren-Copolymeren und Mischungen dieser Elastomere ausgewählt ist.

13. Laminat nach einem der vorhergehenden Ansprüche, wobei es sich bei dem Dien-Elastomer mit einem Massenanteil an Dien-Einheiten von mehr als 50 % der ersten Schicht und dem Dien-Elastomer mit einem Massenanteil an Dien-Einheiten von mehr als 50 % der zweiten Schicht um Polyisoprene mit einem Massenanteil an 1,4-cis-Bindungen von mindestens 90 %, vorzugsweise mindestens 98 %, der Masse des Polyisoprens handelt.

14. Laminat nach einem der vorhergehenden Ansprüche, wobei die erste Schicht eine Dicke in einem Bereich von 0,2 bis

120 mm, vorzugsweise 0,3 bis 15 mm, aufweist und wobei die zweite Schicht eine Dicke in einem Bereich von 0,2 bis 10 mm, vorzugsweise 0,3 bis 7 mm, aufweist.

**15.** Kautschukgegenstand, umfassend ein Laminat gemäß einem der Ansprüche 1 bis 14, wobei der Gegenstand vorzugsweise aus der Gruppe bestehend aus Luftreifen, Vollreifen, Laufketten, Tansportbändern und schwingungsdämpfenden Gegenständen, weiter bevorzugt aus der Gruppe bestehend aus Luftreifen, Vollreifen und Transportbändern, ausgewählt ist.

## Claims

**1.** Elastomer laminate comprising at least two adjacent layers:

- the first layer consisting of a rubber composition based on:

  ◦ 20 to 100 phr of at least one copolymer comprising ethylene units and units of a 1,3-diene of formula (I), the ethylene units in the copolymer representing more than 50 mol% of the monomer units of the copolymer,

  $$CH_2=CR-CH=CH_2 \qquad (I)$$

  the symbol R representing a hydrocarbon chain having 3 to 20 carbon atoms;
  ◦ 0 to 80 phr of at least one diene elastomer having a weight content of diene units of greater than 50%;
  ◦ 10 to 100 phr of a plasticizing system comprising at least one plasticizing resin having a glass transition temperature above 20°C and/or at least one plasticizer that is liquid at 23°C;
  ◦ a reinforcing filler; and
  ◦ a crosslinking system,

- the second layer consisting of a rubber composition based on a diene elastomer having a weight content of diene units of greater than 50% and a crosslinking system.

**2.** Laminate according to Claim 1, wherein the 1,3-diene of formula (I) of the copolymer of the first layer is myrcene, β-farnesene or a mixture of myrcene and β-farnesene.

**3.** Laminate according to either one of the preceding claims, wherein the copolymer further comprises a second 1,3-diene selected from 1,3-butadiene, isoprene or a mixture thereof, preferably the second 1,3-diene of the copolymer is 1,3-butadiene.

**4.** Laminate according to any one of Claims 1 to 3, wherein the content of the copolymer of ethylene and of a 1,3-diene of formula (I) in the composition of the first layer is within a range extending from 20 to 90 phr, preferably from 25 to 80 phr, more preferably from 30 to 80 phr, and wherein the diene elastomer having a weight content of diene units of greater than 50% is present in the composition of the first layer at a content within a range extending from 10 to 80 phr, preferably from 20 to 75 phr, more preferably from 20 to 70 phr.

**5.** Laminate according to any one of the preceding claims, wherein the diene elastomer having a weight content of diene units of greater than 50% of the composition of the first layer is selected from the group consisting of polybutadienes (BRs), natural rubber (NR), synthetic polyisoprenes (IRs), butadiene copolymers, isoprene copolymers and the mixtures of these elastomers.

**6.** Laminate according to any one of the preceding claims, wherein the plasticizing system comprises a plasticizer that is liquid at 23°C and a plasticizing resin having a glass transition temperature above 20°C.

**7.** Laminate according to any one of the preceding claims, wherein the plasticizer that is liquid at 23°C of the composition of the first layer is selected from the group consisting of liquid diene polymers, polyolefin oils, naphthenic oils, paraffinic oils, DAE oils, MES oils, TDAE oils, RAE oils, TRAE oils, SRAE oils, mineral oils, vegetable oils, ether plasticizers, ester plasticizers, phosphate plasticizers, sulfonate plasticizers and mixtures thereof.

**8.** Laminate according to any one of the preceding claims, wherein the content of plasticizer that is liquid at 23°C, in the composition of the first layer, is within a range extending from 1 to 49 phr, preferably from 5 to 40 phr.

**9.** Laminate according to any one of the preceding claims, wherein the plasticizing resin having a glass transition temperature above 20°C of the composition of the first layer is selected from the group consisting of cyclopentadiene homopolymer or copolymer resins, dicyclopentadiene homopolymer or copolymer resins, terpene homopolymer or copolymer resins, $C_5$ fraction homopolymer or copolymer resins, $C_9$ fraction homopolymer or copolymer resins, $\alpha$-methylstyrene homopolymer or copolymer resins and mixtures thereof.

**10.** Laminate according to any one of the preceding claims, wherein the content of plasticizing resin having a glass transition temperature above 20°C, in the composition of the first layer, is within a range extending from 1 to 99 phr, preferably from 5 to 95 phr.

**11.** Laminate according to any one of the preceding claims, wherein the content of reinforcing filler in the composition of the first layer is within a range extending from 30 to 200 phr, preferably from 40 to 190 phr, preferably from 50 to 180 phr.

**12.** Laminate according to any one of the preceding claims, wherein the diene elastomer having a weight content of diene units of greater than 50% of the composition of the second layer is selected from the group consisting of polybutadienes (BRs), natural rubber (NR), synthetic polyisoprenes (IRs), butadiene copolymers, isoprene copolymers and the mixtures of these elastomers.

**13.** Laminate according to any one of the preceding claims, wherein the diene elastomer having a weight content of diene units of greater than 50% of the first layer and the diene elastomer having a weight content of diene units of greater than 50% of the second layer are polyisoprenes comprising a weight content of 1,4-cis bonds of at least 90%, preferably of at least 98%, of the weight of the polyisoprene.

**14.** Laminate according to any one of the preceding claims, wherein the first layer has a thickness within a range extending from 0.2 to 120 mm, preferably from 0.3 to 15 mm, and wherein the second layer has a thickness within a range extending from 0.2 to 10 mm, preferably from 0.3 to 7 mm.

**15.** Rubber article comprising a laminate defined in any one of Claims 1 to 14, said article preferably being selected from the group consisting of pneumatic tyres, non-pneumatic tyres, caterpillar tracks, conveyor belts and anti-vibratory articles, more preferably from the group consisting of pneumatic tyres, non-pneumatic tyres and conveyor belts.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 3089976 A1
- FR 3078973 A1
- WO 2007054224 A
- WO 2007054223 A
- WO 2017093654 A1
- WO 2018020122 A1
- WO 02088238 A
- WO 9736724 A2
- WO 9916600 A1
- WO 03016215 A1
- WO 03016387 A1
- WO 9736724 A
- WO 9916600 A
- EP 0501227 A
- EP 0735088 A
- EP 0810258 A
- WO 0005300 A
- WO 0005301 A


### Littérature non-brevet citée dans la description


- **R. MILDENBERG** ; **M. ZANDER** ; **G. COLLIN**. Hydrocarbon Resins. VCH, 1997
- **S. GEORGES et al.** *Polymer*, 2014, vol. 55, 3869-3878
- **S.GEORGES** ; **M.BRIA** ; **P. ZINCK** ; **M. VISSEAUX**. *Polymer*, 2014, vol. 55, 3869-3878